# EUROPÄISCHE PATENTSCHRIFT

(11) **EP 0 655 128 B1**
(45) Veröffentlichungstag und Bekanntmachung des Hinweises auf die Patenterteilung: **18.03.1998**
(21) Anmeldenummer: 93917790.3
(22) Anmeldetag: 13.08.1993
(51) Int. Cl.: G01J 3/02

(54) **SPEKTROSKOPISCHE SYSTEME ZUR ANALYSE VON KLEINEN UND KLEINSTEN SUBSTANZMENGEN**
SPECTROSCOPIC SYSTEMS FOR THE ANALYSIS OF SMALL AND VERY SMALL QUANTITIES OF SUBSTANCES
SYSTEME SPECTROSCOPIQUES POUR ANALYSER DE FAIBLES ET D'INFIMES QUANTITES DE SUBSTANCES

(30) Priorität: 13.08.1992 DE 4226884; 15.03.1993 DE 4308202
(43) Veröffentlichungstag der Anmeldung: 31.05.1995
(60) Teilanmeldung: 97100430.4
(73) Patentinhaber: Hewlett-Packard Company, Palo Alto, California 94304 (US)
(72) Erfinder: Mächler, Meinrad, 73479 Ellwangen (DE)
(74) Vertreter: Harbach, Thomas
(86) Internationale Anmeldenummer: EP9302166
(87) Internationale Veröffentlichungsnummer: WO9404892

(56) Entgegenhaltungen:
- DE-A- 1 472 069
- DE-U- 9 013 325
- FR-A- 2 643 147
- GB-A- 2 116 707
- US-A- 4 379 225
- US-A- 5 042 893
- PATENT ABSTRACTS OF JAPAN vol. 10, no. 298 (P-505)(2354) 9. Oktober 1986 & JP,A,61 114 146 (HITACHI) 31. Mai 1986
- APPLIED SPECTROSCOPY Bd. 38, Nr. 6 , 1. Dezember 1984 Seiten 816 - 821 YANG 'OPTIMIZATION OF GC/FT-IR MEASUREMENTS'
- IEE PROCEEDINGS-J Bd. 137, Nr. 5 , 1. Oktober 1990 Seiten 301 - 304 BOLLE 'ANALYTICAL SOLUTION OF THE FIELD IN A FIBRE TAPER,ETC.'
- APPLIED OPTICS Bd. 20, Nr. 4 , 15. Februar 1981 Seiten 654 - 659 STEWART 'OPTICS OF FLOW CELLS FOR LIQUID CHROMATOGRAPHY'
- PATENT ABSTRACTS OF JAPAN vol. 10, no. 215 (P-481)26. Juli 1986 & JP,A,61 054 430 (SAITO KENJI) 18. März 1986

## Beschreibung

Die Erfindung betrifft spektroskopische Systeme zur Analyse von kleinen und kleinsten Substanzmengen, insbesondere im Bereich der HPLC.

Zur Analyse von Substanzen werden in der Chemie oder Biologie häufig spektroskopische Methoden verwendet.

Die Druckschrift FR -A1- 2643147 offenbart ein Verfahren und eine Vorrichtung zur spektralen Photometrie von Flüssigkeiten. Die zu untersuchende Flüssigkeit wird mittels Kegelkörper senkrecht in ihrer Strömungsrichtung von Strahlung durchsetzt. Dazu sind die großen Endflächen der Kegelkörper auf die zu untersuchende Flüssigkeit gerichtet.

Die Druckschriften DE-U-9013325 und GB-A-2116707 offenbaren optische Systeme zur Untersuchung von Flüssigkeiten, wobei als wesentliche optische Elemente Linsen zur Führung der Lichter verwendet werden.

Jedoch werden in diesen Druckschriften keine Verfahren zur Analyse von kleinen und kleinsten Substanzmengen angestrebt und spezifische Probleme der Mikroanalytik werden nicht behandelt.

Die quantitative photometrische Analyse von Flüssigkeiten beruht auf dem bekannten Bouguer-Lambert-Beer'schen Gesetz, das den Zusammenhang zwischen Konzentration-Extinktion und durchstrahlter Schichtlänge als Spektralfunktion erfaßt.

Als Voraussetzung für die Gültigkeit wird hier die ungehinderte, also reflexionsfreie Durchstrahlung der Flüssigkeit mit näherungsweise parallelem Licht angegeben. Daraus ergibt sich zwangsläufig ein begrenzter "Lichtleitwert" (nach DIN: "geometrischer Fluß"), der umso niedriger wird, je kleiner der Strahlquerschnitt und je größer die durchstrahlte Schichtlänge wird, was immer dann der Fall ist, wenn an kleinen Substanzmengen mit hoher Empfindlichkeit gemessen werden soll, also durchweg in der Mikroanalytik. Es hat nicht an Versuchen gefehlt, die Fehler durch unvermeidlich verbleibende Reflexionen an den Innenwänden der Küvetten durch sogenannte "Brechungszahlkompensation" zu reduzieren. Eine vollständige Beseitigung gelingt jedoch nicht, weil zwar die Dispersion des Küvettenmaterials bekannt sein mag, nicht jedoch die Dispersion des Probenmaterials. Man reduziert deshalb diese systembedingten Restfehler durch permanente Referenzmessungen, zumeist bezogen auf das jeweils verwendete Lösungsmittel mit der Unterstellung, daß sich Lösung und Lösungsmittel in Brechungszahl und Dispersion nicht wesentlich unterscheiden.

Die vorliegende Erfindung wurde ausgelöst durch Entwicklungen und Erfahrungen in der Spektralanalytik von kleinen Substanzmengen, wie sie z.B. in der Biochemie typisch sind. Die verfügbaren absoluten Substanzmengen sind in sehr vielen Fällen extrem klein, z.B. bei Drüsensekreten usw. Die physiologisch relevanten Konzentrationen sind ebenfalls meist sehr niedrig, so daß es häufig problematisch, wenn nicht sogar unmöglich ist, die für einen signifikanten photometrischen Effekt nötige Schichtlänge zu realisieren, weil sich, wie erwähnt, verschwindend enge Küvettenquerschnitte nicht mit der notwendigen Leistungsdichte reflexfrei auf größere Längen durchstrahlen lassen.

Der vorliegenden Erfindung liegt daher die Aufgabe zugrunde, ein Mikro-Küvettensystem für die Absorptionsphotometrie in Vorschlag zu bringen, das trotz minimaler Küvettenquerschnitte die Durchstrahlung der Probe mit einer ausreichenden Leistungsdichte gewährleistet.

Diese Aufgabe wird erfindungsgemäß durch ein Mikro-Küvettensystem für die Absorptionsphotometrie gelöst, welches ein zylindrisches Küvettenrohr enthält, mit einem Hohlkern und einer darin enthaltenen Probenflüssigkeit, die zumindest in einem Längsstück des Hohlkerns von einer Strahlung durchsetzbar ist, deren Absorption anschließend gemessen wird und das dadurch gekennzeichnet ist, daß das Küvettenrohr und die Probenflüssigkeit brechzahlmäßig so abgestimmt sind, daß sie für die Strahlung als Stufen-Wellenleiter wirken, in welchem die Probenflüssigkeit den Kern und die Wandung des Küvettenrohres den Mantel bilden, und daß die Strahlung an der Außenwand des Küvettenrohres eine mehrfache Reflexion, vorzugsweise eine mehrfache Totalreflexion, erfährt und die Probenflüssigkeit von der Strahlung mehrfach durchsetzt wird.

Man erhält eine optimale Strahlungsausbeute, wenn die Strahlung dem aus Küvettenrohr und Probenflüssigkeit gebildeten Stufen-Wellenleiter mit einem Öffnungswinkel zuführbar ist, welcher der maximalen Apertur des Stufen-Wellenleiters entspricht. Das Küvettenrohr besteht vorzugsweise aus einem isotropen, im interessierenden Spektralbereich absorptionsfreien Material.

Mit Vorteil ist das Küvettenrohr als kreiszylindrische Mikro-Kapillare ausgebildet, die einen Innendurchmesser von weniger als 0,5 mm, vorzugsweise weniger als 0,25 mm, und noch bevorzugterweise weniger als 0,15 mm, und die einen Außendurchmesser von weniger als 1,0 mm, vorzugsweise weniger als 0,35 mm, und noch bevorzugterweise weniger als 0,20 mm, aufweist, so daß man mit Probenflüssigkeiten auskommt, die im Nanoliterbereich liegen können.

Die Erfindung schafft eine längsdurchstrahlte Küvette mit meßbarer Länge, die im Prinzip einen Lichtleiter darstellt. Meßraum ist die Flüssigkeit im zylindrischen Kern der Kapillare. Die (beliebig lange) Strahlführung des Lichtes längs der Küvette besorgt der absorptionsfreie Mantel der Kapillare, der durch Totalreflexion das fortschreitende Strahlbündel immer auf den zentrischen Probenraum fokussiert.

Die Erfindung beruht auf folgendem einfachen Prinzip: sie bezieht die - im interessierenden Spektralbereichabsorptionsfreie Küvettenwandung in das Strahlführungssystem mit ein und stellt damit einen Stufenindex-Lichtleiter dar, mit der Probenflüssigkeit als Kern des Lichtleiters und der Küvettenwand als Mantel.

Die Reflexionen an der Küvettenaußenwand sind verlustfreie Totalreflexionen. Die erfindungsgemäße Lichtleiterküvette ist, analog zu einer Ulbricht'schen Photometerkugel, jedoch in gestreckter Form, auf die ganze Länge Integrator über den gesamten Strahlungsfluß, d.h. der Lichtleitwert als Produkt von Apertur und Eintrittsquerschnitt bleibt unabhängig von der Länge konstant und ist um Größenordnungen höher als bei konventionellen Küvetten.

Neu zu definieren ist allerdings die wirksame photometrische Schichtlänge, die von den durchlaufenen Weglängen in der Probe und in der Wand und von der Eintrittsapertur abhängt. Bei bekannter Apertur und Strahlungsverteilung über den Raumwinkel läßt sich die wirksame Schichtlänge für jedes spezielle Mikro-Küvettensystem berechnen. Untersuchungen des Anmelders haben jedoch ergeben, daß Minimalvolumina bei photometrischen Messungen in der Regel weitgehend falsch eingeschätzt werden. Die Gültigkeit der photometrischen Gesetze (Bouguer-Lambert-Beer usw.) setzt nämlich eine nicht beugungsbegrenzte geometrische Optik voraus, die jedoch bei den heutigen Mikro- und Submikromethoden, insbesondere nach der vorliegenden Erfindung, unterschritten werden. Die Folge ist eine - fast immer unbemerkte - inhomogene Energieverteilung im Raum bzw. in der Ausbreitungsrichtung (bedingt durch Interferenz- und Beugungseffekte). Mit der vorliegenden Erfindung werden diese energetischen Unstetigkeiten durch die integrierende Wirkung des Lichtleiters ausgeglichen, so daß eine korrekte photometrische Messung möglich wird. Wegen der Komplexität der theoretischen Berechnung empfiehlt sich jedoch die Kalibrierung mit Standardsubstanzen. In der Praxis wird daher die wirksame Schichtlänge durch eine Vergleichsmessung mit einer Standardprobe ermittelt, welche die gleiche geometrische Anordnung und das gleiche Lösungsmittel enthält.

Die physikalischen und analytisch-methodischen Gewinne, welche sich durch die vorliegende Erfindung ergeben, liegen bei folgenden Schwerpunkten:
1) Der Lichtleitwert, d.h. die übertragbare optische Intensität und damit die photometrische Empfindlichkeit entsprechen der theoretisch möglichen Grenze, unabhängig von der Schichtlänge.
2) Die Küvette, die bis auf die Dimensionen einer Haarkapillare schrumpfen kann, hat die geforderte ideale Konstanz des Querschnitts mit laminarer, übergangsfreier Strömung.
3) Eine Quarzkapillare kann auf diese Weise zugleich Trennsäule und Küvette sein. Dem Grenzvolumen ist dabei nach unten keine Grenze gesetzt.

Weitere erhebliche Vorteile von dieser Variante der Erfindung werden im Anschluß an die nun folgenden Ausführungen zu der Ausgestaltung der Kapillarküvette selbst anhand von Anwendungsbeispielen beschrieben.

Mit der Erfindung wird ein reflexionsarmer Übergang zwischen Probenflüssigkeit und Material des Küvettenrohres angestrebt.

Gemäß einer Variante des erfindungsgemäßen Mikro-Küvettensystems ist auf der Außenseite des Küvettenrohres, zumindest in Teilbereichen, eine Metallschicht aufgebracht. Es ist jedoch vorzuziehen, das Material des Küvettenrohres derart zu wählen, daß an seiner Außenseite eine Totalreflexion gegenüber einem die Küvette umgebenden Gas, vorzugsweise Luft, entsteht, da das Reflexionsvermögen der Metallschicht etwa 20% niedriger ist als bei Totalreflexion. Für einen Wellenlängenbereich der Strahlung von etwa 200 bis 1000 nm, der spektroskopisch besonders bedeutsam ist, empfiehlt sich die Verwendung eines Küvettenrohres aus Quarz.

Nicht ummantelte Quarzfasern, die als angrenzende Schicht Luft haben, lassen einen Aperturwinkel von 90° zu, d.h. eine Strahlenneigung gegen die Achse von bis zu 45°.

Die Verwendung nicht ummantelter, d.h. "nackter" Kapillaren als Küvetten ermöglicht eine einfache und billige Herstellung der erfindungsgemäßen Mikro-Küvettensysteme.

Bei dem Einsatz des erfindungsgemäßen Küvettensystems ist ferner zu beachten, daß Verschmutzungen und Beschläge der die Totalreflexion bewirkenden Oberfläche, z.B. durch Kondenswasser, kondensierte Lösungsmittel usw., vermieden werden sollten, da diese den Wirkungsgrad der Energieübertragung beeinträchtigen. Die Übertragungsfähigkeit bricht jedoch erst zusammen, wenn die Dicke eines Beschlages etwa 0,5 bis 1 µm erreicht hat. Unter halbwegs normalen Laborbedingungen treten solche massiven Beschläge allerdings kaum auf und eventuelle derartige Störungen lassen sich leicht beheben, indem man die Lichtleiter in einem Ultraschallbad reinigt.

Trotz dieser Einschränkungen stellen nach heutigem Verständnis nicht ummantelte Quarz-Lichtleiter ein bevorzugtes, optisch brauchbares Material dar, da in dem für die optische Analysentechnik wichtigen Spektralbereich UV, VIS, NIR von etwa 200 nm bis 3000 nm nur wenige Materialien durchgehend absorptionsfrei, isotrop und chemisch inert sind. Es gibt kein Glas, das den ganzen Spektralbereich überdeckt, vor allem gibt es für das kurzwellige UV keine geeigneten Gläser. Die hervorragend durchlässigen Fluoride (Lithium-, Calcium-, Magnesium- und Barium-Fluorid) sind teilweise nicht isotrop (MgF₂), mechanisch ziemlich weich und lassen sich nicht immer zu Fasern verarbeiten. Außerdem sind sie nicht für alle Anwendungen ausreichend chemisch resistent. Von den Oxiden sind vor allem zwei im betrachteten Sinne hochinteressant: Al₂O₃ und eben SiO₂, also synthetischer Saphir und synthetischer Quarz. Beide sind hervorragend optisch durchlässig, chemisch inert und hoch temperaturbeständig. In den Brechungszahlen liegen sie indes weit auseinander. Quarz liegt im unteren, Saphir im oberen Grenzbereich der optischen Materialien.

Weil im Sinne einer möglichst einfachen Realisierung des Mikro-Küvettensystems ein möglichst reflexionsarmer Übergang zwischen Flüssigkeit und Mantelmaterial angestrebt wird bei vorzugsweise gleichzeitiger Totalreflexion gegen Luft, ist Saphir mit seiner Brechnungszahl von rund 1,8 weniger geeignet, während Quarz mit einer Brechnungszahl von 1,458 sehr gut geeignet ist, da die Probenflüssigkeiten in der Regel in einem Brechzahlbereich von etwa 1,3 bis 1,5 liegen. (Kunststoffe kommen wegen ihrer strukturbedingten Absorptionsbanden weniger in Frage).

In der überwiegenden Mehrzahl der Anwendungsfälle sind Durchflußküvetten erforderlich, die im Idealfall ohne Querschnittsänderung laminar durchströmt werden sollten, wobei Fließrichtung und Strahlengang bei gestreckten Küvetten zusammenfallen. Bei konventionellen Küvetten ist der Strahlbüschelquerschnitt kleiner als der Strömungsquerschnitt, eine Voraussetzung für die reflexionsfreie, d.h. fehlerlose Durchstrahlung. Diese systembedingte, unvollständige Volumenausnutzung macht die Zufluß- und Abflußkanäle konstruktiv einfach. Bei der erfindungsgemäßen Lösung ist dagegen der optische Strahlbüschelquerschnitt durchwegs größer als der Strömungsquerschnitt der Probe mit der zwangsläufigen Folge, daß die Zu- und Abflußkanäle irgendwo in den Strahlengang einschneiden müssen, wenn eine koaxiale Lichteinstrahlung in den "Küvetten-Lichtleiter" angestrebt wird.

Gemäß einer bevorzugten Ausführungsform der Durchflußküvette ist auf die beiden Enden des Küvettenrohres ein ringförmiges Aufsatzstück aufgebracht, das eine Ein- bzw. Auslaßöffnung enthält, welche in eine Ein- bzw. Auslaßbohrung des Küvettenrohres mündet, wobei zwischen dem Aufsatzstück und der Außenfläche des Küvettenrohres eine Metallschicht aufgebracht ist. Diese Ausführungsform eignet sich besonders für eine axiale An- und/oder Auskopplung der Strahlung an die Küvette.

Besonders bevorzugt ist jedoch eine Schrägan- und/oder -auskopplung der Strahlung an der Küvette.

Die An- und/oder Auskopplung erfolgt zweckmäßigerweise mittels eines Kegelkörpers, der vorzugsweise aus dem gleichen Material besteht wie das Küvettenrohr, der auf seinem Kegelmantel eine Nut aufweist, wobei im Idealfall deren Krümmungsradius dem Außenradius des Küvettenrohres entspricht und wobei das Küvettenrohr unter Zwischenschaltung eines absorptionsfreien Mittels in der Nut derart gehaltert ist, daß im Falle der Strahlungsankopplung die Spitze des Kegelkörpers in Richtung des Strahlungsdurchgangs und im Falle der Strahlungsauskopplung die Spitze des Kegelkörpers entgegen der Richtung des Strahlungsdurchgangs weist. Der Kegelkörper ist vorzugsweise kreiszylindrisch ausgebildet, wobei der Winkel, den die Kegellängsachse mit dem Kegelmantel einschließt, vorzugsweise kleiner oder gleich einem Viertel des maximalen AperturwinkelSdes Stufen-Wellenleiters ist. Bei einem Kegelkörper und einem Küvettenrohr aus Quarz beträgt der Winkel, den die Kegellängsachse mit dem Kegelmantel einschließt, etwa 15° bis 22,5°, vorzugsweise etwa 20° bis 22,5°, für eine optimale Energieübertragung.

Bei der Kleinheit der Verhältnisse ist es nicht unbedingt notwendig, eine genau passende Zylindernut einzuschleifen, weil eine einfache 90°-Winkelnut mit einem Immersionsmittel in den meisten Fällen auch ausreicht.

Wenn man prismatische Kapillaren einsetzt, wie sie in der Thermometrie üblich sind, dann genügt an dem Kegel eine angeschliffene Planfläche, was die Herstellung bedeutend erleichtert.

Aus Gründen der Handhabbarkeit hat es sich ferner als günstig erwiesen, wenn der Anschluß des Küvettensystems an eine Lichtquelle und/oder an eine Meßeinrichtung mittels eines Aperturwandlers erfolgt, der jeweils einen koaxialen, kegelförmigen Lichtleiter oder Spiegel mit einer Lichteintritts- und einer Lichtaustrittsöffnung enthält, wobei die größere der Öffnungen jeweils dem Küvettenrohr zugekehrt ist. Derartige Aperturwandler sind in dem deutschen Patent 4226884 des Anmelders beschrieben. Der Aperturwandler besteht vorzugsweise aus dem gleichen Material wie das Küvettenrohr und gegebenenfalls der zur Ein- und/oder Auskopplung verwendete Kegelkörper, wobei die Lichteintrittsöffnung und die Lichtaustrittsöffnung des Aperturwandlers bevorzugt senkrecht zur optischen Achse verlaufende Querschnittsöffnungen sind. Der Aperturwandler wird zweckmäßigerweise derart eingesetzt, daß der jeweils kleineren Querschnittsöffnung des Aperturwandlers zumindest ein Stück eines vorzugsweise zylindrischen Lichtleiters vorgeschaltet ist, dessen Querschnitt im Anlagebereich an den Aperturwandler der kleineren Querschnittsöffnung entspricht, zur Ankopplung des Aperturwandlers an eine Lichtquelle oder Meßvorrichtung, wobei der Lichtleiter, zumindest zwischen seinen Endbereichen, in der Regel als vorzugsweise flexibles Lichtleitkabel ausgebildet ist. Die zumindest eine Lichtleitfaser des Lichtleiters besteht zweckmäßigerweise aus dem gleichen Material wie das Küvettenrohr und gegebenenfalls der Kegelkörper und/oder der Aperturwandler. Man erhält eine gute Ankopplung der Strahlung an das Küvettensystem, wenn die Austrittsapertur des Kegelkörpers größer ist als die Eintrittsapertur des Aperturwandlers, da hierdurch sichergestellt ist, daß die Strahlung in das Küvettenrohr mit einem für die Totalreflexion ausreichenden Neigungswinkel eintritt.

Bei Verwendung von Quarz als Küvettenrohr, Kegel und Aperturwandler sowie gegebenenfalls als Lichtleiter beträgt zweckmäßigerweise der Winkel, den der Kegelmantel des Aperturwandlers zu seiner Mittelachse einschließt, etwa 13° und der Winkel, den der Kegelmantel des Kegels zu seiner Mittelachse einschließt, etwa 20° bis 22,5°. Gemäß einer bevorzugten Variante der Erfindung sind der Kegelkörper und der zugehörige Aperturwandler als vorzugsweise einstückiger Doppelkegel ausgebildet.

In der Frage des Strahlungsübergangs von Beleuchtungs- oder Transport-Lichtleitern auf Kapillar-(Küvetten-)Lichtleiter gleicher zulässiger Apertur, erscheint die Anwendung von Aperturwandlern mit Doppelkegeln vom Prinzip her zunächst überflüssig, da der Strahlengang auf reduzierte Apertur aufgeweitet und anschließend wieder zurückgenommen wird. Die Verwendung der Doppelkegel ist jedoch aus technischer Sicht sehr nützlich, da beide Lichtleiter, der zur Beleuchtung dienende und die Kapillare, in der Mikroanalyse Durchmesser von nur wenigen Zehntel-Millimetern aufweisen. Es ist technisch sehr aufwendig, in das Ende des Beleuchtungs-Lichtleiters die Nut einzuarbeiten, die den Übergang zur Kapillare schaffen soll. Bei Verwendung der Doppelkegel läßt sich dies technisch besser beherrschen. Noch deutlicher wird dieser Vorteil bei dem Übergang von einem Beleuchtungs-Lichtleiter mit niedriger Apertur, wie z.B. 26°, auf eine nicht ummantelte Quarz-Kapillare mit 44°-Apertur, wo man an die Faser mit einem Durchmesser von 0,6 mm noch einen Verjüngungskegel anschleifen und polieren und dazu noch mit einer Nut versehen müßte.

Derartige Übergänge sind jedoch, wie aus DE-4226884 bekannt ist, bei hochgeöffneten Spektrometern, vorzugsweise Simultanspektrometern, notwendig, wo durch eine Kombination von Quarz-Lichtleitern mit entsprechenden Aperturwandlern eine optische Energieausnutzung möglich ist, die der theoretisch möglichen Grenze nahe kommt. Die dabei eingesetzten Lichtleiter haben einen Kern aus synthetischem geschmolzenem Quarz, der von einem dünnen Mantel umschlossen ist, dessen Brechungszahl bzw. Dispersion kleiner sein muß als bei Quarz. Da Quarz schon im unteren Bereich der Brechungszahlen und Dispersionen liegt (nur einige Fluoride liegen noch darunter), kommen nur ganz wenige Mantelmaterialien in Frage. Zur Zeit üblich sind ein spezieller Kunststoff, der aber chemisch und thermisch empfindlich ist, sowie die Dotierung der Quarzaußenwand mit vorwiegend Fluor in einem komplizierten Verfahren. Diese dotierten Quarzfasern verfügen über nutzbare Aperturwinkel von rund 26°, d.h. die zulässige Strahlneigung gegen die Achse beträgt rund 13°. Die Werte für die mit Kunststoff ummantelten Quarzfasern liegen nur geringfügig höher.

Da nicht ummantelte Quarzfasern, die also als angrenzende Schicht ein Gas, insbesondere Luft, haben, einen Aperturwinkel von knapp 90° zulassen, also eine Strahlneigung gegen die Achse von knapp 45°, müssen die Doppelkegel derart gestaltet sein, daß eine optimale Lichtübertragung erfolgt. Dies bedeutet, daß die dem Lichtleiter zugekehrte Verjüngung des Doppelkegels dessen maximaler Apertur von 26° angepaßt ist, was einem Kegelwinkel zur Symmetrieachse von etwa 13° entspricht, während die der Kapillare zugekehrte Verjüngung des Doppelkegels dessen maximaler Apertur von knapp 45° angepaßt sein muß, was bei der vorzugsweise verwendeten schrägen Einkopplung mittels der Nut in der Außenfläche des entsprechenden Kegels einem Kegelwinkel zur Symmetrieachse von maximal 22,5° entspricht. Hierdurch wird sicher vermieden, daß die Küvettenwandung zu einem selbständigen Lichtleiter mit nur reduziertem Strahlungsübergang zum Küvetteninhalt wird, was sich bei einer Ankopplung mit gleich niedriger Apertur, wie sie im Beleuchtungs-Lichtleiter herrscht, ergeben würde.

Als zweckmäßig hat es sich ferner erwiesen, wenn zwischen Aperturwandler und Kegelkörper ein zylindrisches Teil vorgesehen ist, welches die Austrittsfläche des Aperturwandlers an die Eintrittsfläche des Kegelkörpers ankoppelt und das vorzugsweise aus dem gleichen Material besteht wie der Kegelkörper und der Aperturwandler.

Die Doppelkegel werden gemäß einer bevorzugten Ausgestaltung im zylindrischen Teil vorzugsweise über punktuelle Anlageflächen gehaltert.

Gemäß einer weiteren, besonders bevorzugten Ausgestaltung der Erfindung sind zwei Kegelkörper derart beabstandet voneinander angeordnet, daß ihre Nuten miteinander fluchten und nach oben gekehrt sind und daß in den Nuten das Küvettenrohr liegt. Vorzugsweise ist dabei zumindest einer der Kegelkörper längs des Küvettenrohres verschiebbar gelagert zur Einstellung der optischen Weglänge und/oder des einer Absorptionsmessung zuzuführenden Längsstücks des Küvettenrohres. Diese Konstruktion gestaltet sich besonders praktisch, wenn zumindest einer der Doppelkegel oder wenn beide Doppelkegel verschiebbar gelagert sind.

Die Erfindung betrifft des weiteren die Verwendung des vorbeschriebenen Mikro-Küvettensystems in einem spektroskopischen System, insbesondere in der Absorptionsspektrometrie von vorzugsweise schwach absorbierenden Flüssigkeiten, wie z.B. bei der Konzentrationsmessung von wäßrigen Nitratlösungen.

Eine weitere bevorzugte Verwendung des vorbeschriebenen Mikro-Küvettensystems wird in der HPLC gesehen. In der HPLC (High Pressure Liquid Chromatography bzw. High Performance Liquid Chromatography) ergibt sich nämlich durch die Erfindung eine völlig neue meßtechnische Möglichkeit. Weil die Kapillarküvette die Chromatographiesäule weder im Querschnitt noch funktionell unterbricht, können in einer längeren Säulenkolonne beliebig viele Meßstellen in Folge untergebracht werden, die sich gegenseitig nicht beeinflussen. Das wird besonders interessant, wenn den verschiedenen Meßorten auch verschiedene optische Kriterien zugeordnet sind.

Weil der Abstand zwischen den Koppelstellen frei gewählt werden kann, ist es problemlos möglich, das Meßgut in der Kapillare durch physikalische Größen zu beeinflussen, z.B. durch elektronische, magnetische oder hochfrequente Felder, durch UV-, Alpha-, Neutronen-, Röntgenbestrahlung usw. Hierzu wird das Mikro-Küvettensystem zweckmäßigerweise in einem entsprechenden Reaktionsraum angeordnet. Wegen der Lichtleiteranschlüsse zum eigentlichen Meßgerät sind dabei nur einfache Teile kontaminationsgefährdet. Im Falle der UV-Bestrahlung ergibt sich ganz zwanglos die Fluoreszenzmessung. Wenn man in diesem Fall den auskoppelnden Aperturwandler aus geeignetem Glas herstellt, ist die Anregungsstrahlung für die nachfolgende Fluoreszenzstrahlungsmessung automatisch abgeblockt. Was für die Fluoreszenz gesagt wurde, gilt in gleicher Weise auch für Raman-Strahlungsmessungen. Dabei sei nochmals ausdrücklich festgestellt, daß auch im Falle dieser energiearmen optischen Effekte die erfindungsgemäße Anordnung das geometrische Optimum der Energieübertragung liefert, weil der spektrometrisch ausnutzbare Raumwinkel, also die Meßapertur, von der Küvettenapertur voll ausgefüllt wird. Das erfindungsgemäße Mikro-Küvettensystem hat somit für die optische Meßtechnik der Mikroanalytik eine universelle Bedeutung. Man kann erwarten, daß damit auch ein Fortschritt auf dem Gebiet der mikrochemischen Reaktionstechnik bzw. -kinetik erzielt werden wird. So ist es bekannt, die Innenwände von Glas-(Quarz-)Kapillaren chemisch zu aktivieren, wobei sehr spezifische Reaktionen nach der Befüllung ablaufen, die wegen der Kapillarkräfte von selbst erfolgt. Die Erfindung ermöglicht hier eine erheblich verbesserte Meßgenauigkeit.

Mit der Erfindung wird des weiteren ein spektroskopisches System geschaffen, in welchem zumindest eine Probe mittels von einer Lichtquelle ausgehendem Licht beleuchtet und das von der Probe ausgehende Licht auf den Eintrittsspalt zumindest eines Spektrometers, insbesondere eines Simultanspektrometers, gebündelt wird, und das dadurch gekennzeichnet ist, daß im Objektraum zwischen der Lichtquelle bzw. deren Bild und dem Eintrittsspalt des Spektrometers ein vorbeschriebenes Mikro-Küvettensystem enthalten ist.

Das spektroskopische System verwendet mit Vorteil als Beleuchtungsanordnung eine punktförmige oder quasi punktförmige Lichtquelle, die mittels eines asphärischen, vorzugsweise eines Ellipsoid-Spiegels, auf die Eintrittsöffnung eines zwischen Lichtquelle und Objekt angeordneten Aperturwandlers oder eines diesem vorgeschalteten Lichtleiters abgebildet ist. Zweckmäßigerweise wird als Spektrometer eine aus einem Beugungsgitter und einer Empfängereinheit bestehende Anordnung verwendet. Als Beugungsgitter dient mit Vorteil ein holographisches Konkavgitter und als Empfänger eine Photodiodenzelle. Es ist günstig, wenn der Spiegel der Beleuchtungseinrichtung und das Konkavgitter des Spektrometers die gleiche Apertur aufweisen.

Eine weitere Möglichkeit, die sich über die Erfindung eröffnet, besteht darin, daß aktivierte, vorzugsweise zum einmaligen Gebrauch vorgesehene Kapillarabschnitte verwendet werden, um Mikroküvetten zu bilden.

Des weiteren ist es vorteilhaft, das Mikro-Küvettensystem als Strahlungsquelle für eine Sekundärstrahlung zu verwenden, welche von einer vorzugsweise durch Schrägeinkopplung in die Küvette eingespeisten Primärstrahlung angeregt ist. Wenn als Sekundärstrahlung eine Fluoreszenzstrahlung entsteht, kann diese direkt von einem Photoempfänger gemessen werden. Wenn als Sekundärstrahlung eine Fluoreszenz- oder Raman-Strahlung entsteht, empfiehlt es sich unter Umständen, die Kapillarküvette als Eintrittsspalt eines Spektrometers, vorzugsweise eines Simultanspektrometers, zu verwenden oder diese im Eintrittsspalt anzuordnen bzw. auf diesen abzubilden.

Abschließend sei noch vermerkt, daß die Erfindung, die im Kern eine geometrisch-optische bzw. eine energetisch-optische Optimallösung darstellt, nicht nur auf Anwendungen mit hoher spektraler Auflösung in einem großen Spektralbereich begrenzt ist, sondern mit dem gleichen energetischen Gewinn im einfachen monochromatischen Betrieb einzusetzen ist.

Die beiliegenden Zeichnungen dienen der weiteren Erläuterung der Erfindung.
- Fig. 1: zeigt eine schematisierte, längsgeschnittene Seitenansicht von einem Ausführungsbeispiel eines erfindungsgemäßen Mikro-Küvettensystems;
- Fig. 2: zeigt im Längsschnitt ein weiteres Ausführungsbeispiel des erfindungsgemäßen Mikro-Küvettensystems als Durchflußküvette mit axialer Strahlungsankopplung;
- Fig. 3: zeigt eine Teilansicht von einem weiteren Ausführungsbeispiel des erfindungsgemäßen Mikro-Küvettensystem als Durchflußküvette mit schräger Strahlungsankopplung;
- Fig. 4a-c: zeigen einen Schnitt längs der Linie IV-IV des in Fig. 3 gezeigten Küvettensystems zur Verdeutlichung verschiedener Möglichkeiten für die schräge Strahlungseinkopplung;
- Fig. 5: zeigt ein weiteres Ausführungsbeispiel des erfindungsgemäßen Mikro-Küvettensystems als Durchflußküvette, bei welchem mit Hilfe von Doppelkegeln eine An- und Auskopplung der Strahlung erfolgt;
- Fig. 6: zeigt einen Längsschnitt durch den linken Teil der Anordnung von Fig. 5, wobei hier die speziellen, für eine optimale Übertragung mit Quarzelementen geeigneten Kegelwinkel angegeben sind;
- Fig. 7: zeigt eine Darstellung entsprechend dem linken Teil von Fig. 5 mit zusätzlichen Halterungen für den Doppelkegel;
- Fig. 8: zeigt einen Schnitt längs der Linie IIX-IIX von Fig. 7 zur Erläuterung der Konstruktion für die Halterung;
- Fig. 9: zeigt eine der Fig. 5 entsprechende Darstellung, bei welcher die Doppelkegel längs des Küvettenrohres zur Einstellung der optischen Weglänge verschiebbar sind;
- Fig. 10: zeigt ein spektroskopisches System, bei welchem das erfindungsgemäße Mikro-Küvettensystem Verwendung findet;
- Fig. 11: zeigt die Anordnung des erfindungsgemäßen Mikro-Küvettensystems in einem Reaktionsraum;
- Fig. 12: zeigt einen Querschnitt durch Fig. 11 längs der Linie XXII-XXII;
- Fig. 13: zeigt die Anordnung des erfindungsgemäßen Mikro-Küvettensystems zur integralen Fluoreszenzmessung;
- Fig. 14: zeigt das erfindungsgemäße Mikro-Küvettensystem als Strahlungsquelle im Eintrittsspalt eines Simultanspektrometers, insbesondere zur spektralen Messung der Fluoreszenz oder Raman-Strahlung.

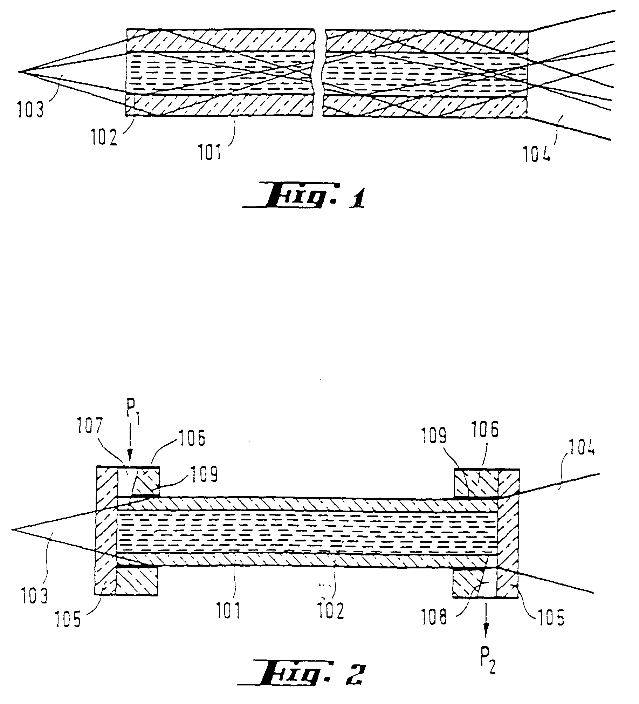

Im folgenden wird das Mikro-Küvettensystem der Erfindung und bevorzugte Verwendungen desselben anhand der Fig. 1 bis 14 näher erläutert.

Fig. 1 zeigt einen Stufenindex-Wellenleiter, der aus einem kreiszylindrischen Küvettenrohr 101 besteht, welches für den interessierenden Spektralbereich absorptionsfrei ist und in seinem Inneren eine Probenflüssigkeit 102 enthält. Das Küvettenrohr 101 dient als Mantel des Wellenleiters, dessen Kern die Probenflüssigkeit 102 bildet. Man bezieht auf diese Weise die Küvettenwandung in das Strahlenführungssystem ein, wie dies der Strahlenverlauf im Inneren der Küvette andeutet. Mit 103 ist die Eintrittsapertur, mit 104 die Austrittsapertur des Küvettensystems bezeichnet.

Fig. 2 zeigt eine mögliche Ausführungsform einer Durchflußküvette. Darin sind wieder 101 das Küvettenrohr als Mantel des Lichtleiters, 102 die Probenflüssigkeit, 103 und 104 Eintritts- und Austrittsapertur, sowie 105 die Küvettenabschlußfenster. Ringförmige Aufsatzstücke 106 enthalten Zufluß- 107 bzw. Abflußbohrungen 108 für die Probenströmung, die gemäß dem Pfeil P₁ in das Küvettenrohr 101 eintritt und gemäß dem Pfeil P₂ aus diesem austritt. Diese Aufsatzstücke 106 sind mit den Abschlußfenstern 105 und dem Küvettenrohr 101 verkittet und versteifen die Konstruktion. Auf dem kurzen, zylindrischen Abschnitt, in welchem das Aufsatzstück 106 auf der Außenfläche des Küvettenrohres aufsitzt, d.h. im Bereich der Kittfuge zwischen 101 und 106 ist der Küvettenaußenmantel, wie durch das Bezugszeichen 109 angedeutet, metallisch verspiegelt, um die Funktion der Lichtleitung auch in diesem Abschnitt nicht zu unterbrechen. Das Reflexionsvermögen dieser Metallschicht ist zwar um etwa 20% niedriger als die Totalreflexion, doch ist dieser Teilverlust auf die Gesamtfläche bezogen gering.

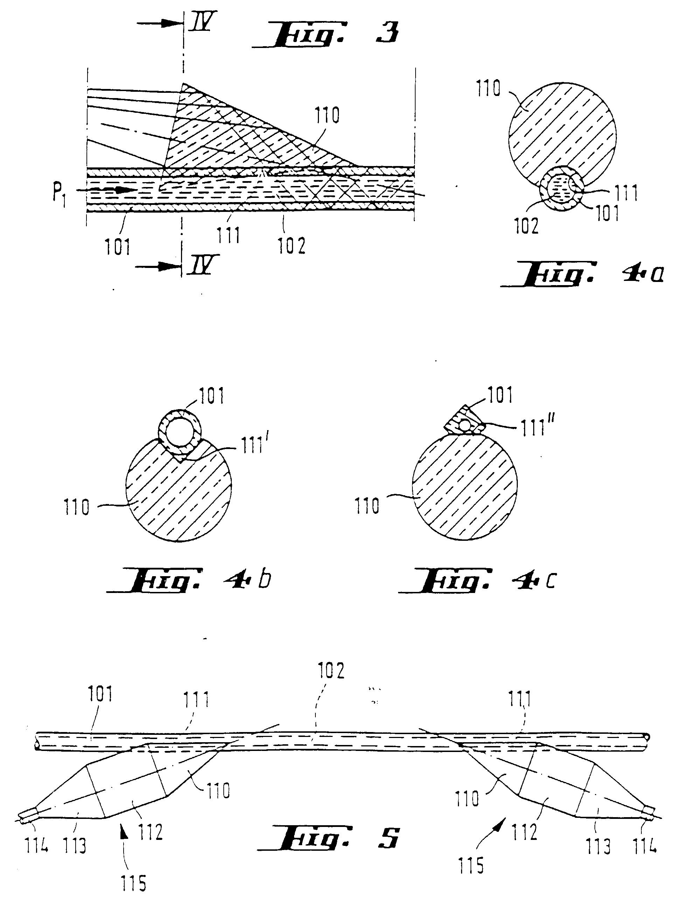

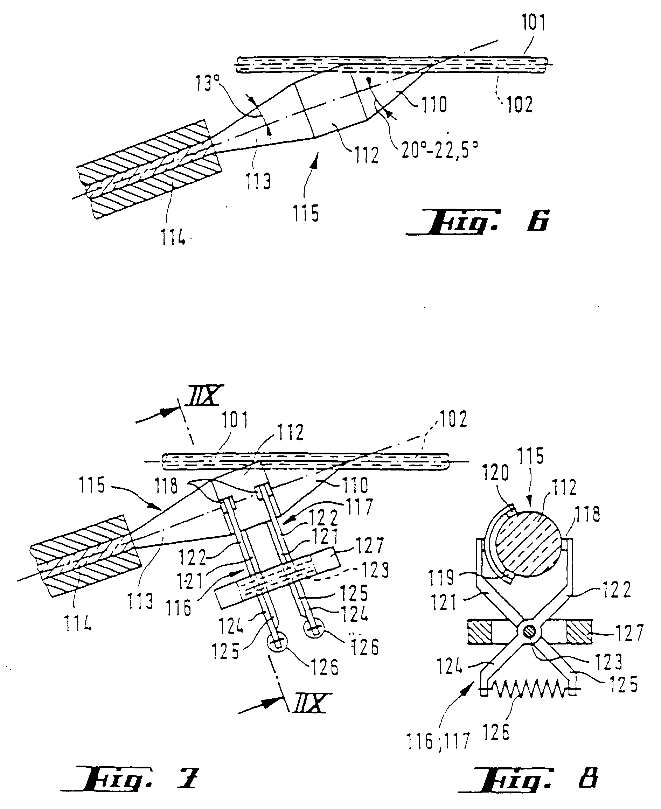

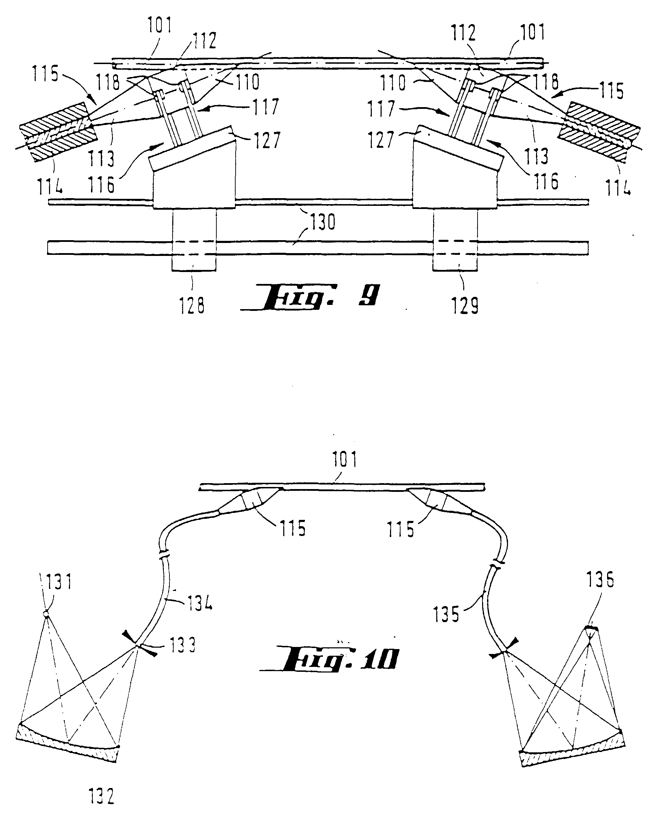

Wenn man auf eine koaxiale Lichteinstrahlung in das Küvettenrohr 101 der Lichtleiterküvette verzichtet, ergibt sich eine besonders einfache und überzeugende Lösung für den Durchfluß der Probenflüssigkeit 102, die dann an den Enden des Küvettenrohres 101 zu- bzw. abgeführt werden kann. Die Fig. 3 und 4a-c zeigen das Prinzip einer derartigen schrägen Einkopplung des Lichtes in das kreiszylindrische Küvettenrohr 101.

Während bei zentrischer Einkopplung gemäß Fig. 1 und Fig. 2 die theoretisch vorhandene Verlustrate durch Licht, das sich nur im absorptionsfreien Mantel als Lichtleiter fortpflanzt, gering ist, wird diese bei der bevorzugten Schrägeinkopplung gemäß den Fig. 3 und 4a-c prinzipiell ausgeschaltet.

Hier ist ein Kegelkörper 110, der aus dem gleichen Material besteht wie das Küvettenrohr 101, also z.B. aus Quarz, entlang seines Kegelmantels mit einer teil- bzw. halbzylindrischen Nut 111 versehen, die den gleichen Radius aufweist wie der Außenmantel des Küvettenrohres 101 und in die sich das Küvettenrohr 101 exakt einfügt. Die kreiszylindrische Nut 111 kann über die gesamte Länge die gleiche Tiefe aufweisen, sie kann aber auch, von einem tangentialen Berührungspunkt ausgehend, zunehmend tiefer werden. Ein absorptionsfreies Immersionsmittel stellt den optischen Kontakt zwischen Kegelkörper 110 und Küvettenrohr 101 her. Der aufgesetzte Kegelkörper 110 wirkt als Aperturwandler und gestattet auf diese Weise eine optische Einkopplung mit dem bestmöglichen Wirkungsgrad durch Anpassung des Kegelwinkels, wobei, wie der Strahlengang in Fig. 3 andeutet, eine effektiv größere Apertur der Beleuchtung erreicht wird mit der Folge, daß die Probenflüssigkeit 102 öfters durchlaufen und damit die wirksame Schichtlänge vergrößert wird. Der grundsätzliche Aufbau und die Wirkung derartiger Aperturwandler sowie bevorzugte Anwendungen derselben sind in DE 4226884 ausführlich erläutert.

Die Verwendung derartiger Aperturwandler beruht auf der Erkenntnis, daß in der Spektralanalytik nur energetisch-optische Fragestellungen zu lösen sind (Frequenz, Amplitude, Geschwindigkeit, Azimut und Achsenverhältnis der elektromagnetischen Strahlung), so daß alle Fragen nach der Bildlage, der Bildschärfe usw. zurückstehen können, und daß man sich daher auf die Forderung beschränken kann, das Licht bzw. die Strahlung so verlustarm wie möglich durch den Objektraum zu führen sowie mit geeigneten Mitteln die Strahlneigungen, als die Aperturen, der Meßmethode anzupassen. Da Brechnungs- und Beugungseffekte dispersionsbehaftet, also nicht achromatisch sind, sind darauf beruhende Mittel ungeeignet. Als Mittel der Wahl verbleiben daher Reflexionsmittel, wobei man vorzugsweise von der Totalreflexion Gebrauch macht.

Der kegelartige Aperturwandler, der zum Schutze der totalreflektierenden Außenfläche vor Verschmutzungen vorzugsweise mit einem hermetisch abgeschlossenen Hohlraum umhüllt ist, läßt sich auch als konsequente Reduzierung eines koaxialen Teleskops mit Innenwandreflexionen verstehen.

Der Aperturwandler kann in einfacher Weise an die bei vielen Ausführungsformen von photometrischen und spektroskopischen Systemen ohnehin zweckmäßigerweise verwendeten Lichtleiter angekoppelt werden. Wie leicht zu ersehen ist, verändert seine kegelartige Ausgestaltung die Apertur des durchfallenden Lichts immer in dem Sinn, daß am kleinen Querschnitt des Kegels die Apertur groß und am großen Querschnitt klein ist.

Der Aperturwandler ermöglicht es somit, daß man mit Lichtleitern verschiedener Aperturen beliebige photometrische Systeme in Absorption oder Emission aufbauen kann, deren Energieübertragungsgrad dem jeweils leistungsfähigsten optischen Spektrometersystem angepaßt ist.

Bei der in Fig. 3 gezeigten Variante des erfindungsgemäßen Küvettensystems kann das Ausflußende des Küvettenrohres 101 offen gelassen sein, so daß die Probenflüssigkeit dort frei abtropft, wenn eine integrale Absorptionsmessung durchgeführt wird, wobei in diesem Falle am Auslaßende lediglich eine Photomultiplier- oder eine entsprechende Meßvorrichtung angeschlossen ist.

Aus den vorstehenden Ausführungen ist ferner bekannt, daß die Wirkung der Aperturwandlung durch die Kombination von zylindrischen und konischen Lichtleitern reversibel und in der Wirkung variierbar ist. Man kann daher am Ausflußende des Küvettenrohres einen weiteren Kegelkörper entsprechend befestigen, der die Austrittsapertur verkleinert und beispielsweise an die Eingangsapertur eines Meßsystems oder eines Lichtleiters, welcher das austretende Licht einem Meßsystem zuführt, anpaßt.

Diese Konstruktion ist in den Zeichnungen jedoch nicht näher dargestellt.

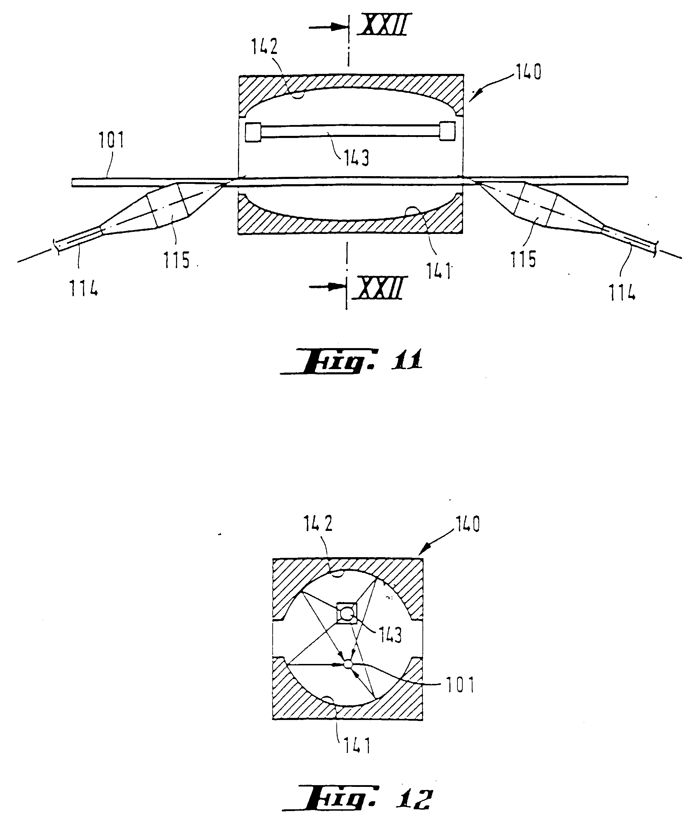

Wenn man die Möglichkeiten der Aperturwandler konsequent ausnützt, dann gelangt man zu der in Fig. 5 dargestellten Konstruktion. Das Küvettenrohr 101 mit der durch dasselbe geleiteten Probenflüssigkeit 102 liegt hier in den angepaßten Nuten 111 der Kegel 110 auf. Diese Kegel 110 gehen über kurze zylindrische Teile 112 in Gegenkegel 113 über, an deren Spitzen in der oben beschriebenen Weise Lichtleiter 114 angeschlossen sind. Die Funktionselemente 110, 112, 113 sind jeweils in einem Stück als Doppelkegel 115 gefertigt, wobei die mechanische Halterung im optisch unkritischen zylindrischen Teil 112 erfolgen kann, wie im folgenden anhand der Fig. 7 und 8 noch näher ausgeführt wird.

Fig. 6 zeigt ein konkretes Ausführungsbeispiel für die Ankopplung eines Quarz-Lichtleiters 114 an ein nicht ummanteltes Quarz-Küvettenrohr 101, da Quarz-Lichtleiter, wie erwähnt, für die Anwendungen der Spektroskopie im UV- und VIS-Spektralbereich besonders günstig sind. In Fig. 16 ist die Dimensionierung des aus Aperturwandler 113 und als Koppelglied wirkender Kegelkörper 110 kombinierten Doppelkegels 115 für eine praktische Anwendung in einem Spektralbereich von etwa 200 bis 1000 nm angegeben. Dieser Doppelkegel 115 mit zylindrischen Zwischenstück 112 stellt die Verbindung her zwischen dem dotierten Quarz-Lichtleiter 114 mit etwa 26° zulässiger Apertur und der "nackten" Quarzküvette 101 mit etwa 45° Apertur. Der Kegel 113 zum koaxialen Anschluß des Lichtleiters 114 hat den zulässigen gesamten Öffnungswinkel von 26°, also 13° Neigung des Kegelmantels gegen die Achse. Der küvettenseitige Kegel hat dagegen wegen der Asymmetrie der Einstrahlung einen gesamten Öffnungswinkel von 40° bis 45°, d.h. eine Neigung des Kegelmantels gegen die Achse von 20° bis 22,5°. Die exakten Werte werden durch die praktischen Anforderungen gegeben. Der zylindrische Teil 112 zwischen den beiden Kegeln erleichtert primär die Herstellung, er gestattet zugleich aber auch eine einfache und gut reproduzierbare Befestigung, wie sie in den Fig. 7 und 8 dargestellt ist.

Der über die Nut 111 das Küvettenrohr 101 von unten zur Hälfte umschließende Doppelkegel 115, der an seinem, dem Küvettenrohr 101 abgekehrten Ende an dem Lichtleiter 114 angekoppelt ist, wird im Bereich des zylindrischen Teils 112 von zwei Klammern 116, 117 getragen, von denen jede über je drei annähernd punktuell gestaltete Anlageflächen 118, 119, 120 um je 120° gegeneinander versetzt an der Außenseite des Doppelkegels 115 elastisch anliegt. Die Klammern 116, 117 sind zangenförmig ausgebildet, wobei die eine Zangenbacke zwei der Anlageflächen 119, 120 und die andere Zangenbacke die dritte Anlagefläche 118 trägt. Die, bezogen auf die Drehachse 123, den Zangenbacken 121, 122 abgekehrten Betätigungsarme 124, 125 der Klammern werden durch eine Feder 126 auseinandergepreßt, so daß durch Überwindung der Federkraft die Klammern gelöst werden können. Die Klammern 116, 117 können an einem gemeinsamen Halter 127 befestigt sein.

Fig. 9 zeigt eine besonders interessante Variante der Erfindung. Da, wie schon erwähnt, die jeweils photometrisch optimale Schichtlänge, bedingt durch Konzentration und Extinktionskoeffizient, von der jeweiligen Meßaufgabe abhängt und die Küvette wegen der Schrägeinkopplung eine Kapillare beliebiger Länge sein kann, läßt sich die wirksame Schichtlänge einfach dadurch variieren und einstellen, daß man die beiden Doppelkegel 115 mit den Klammern 116, 117 und dem Halter 127 auf je einem Schlitten 128, 129 befestigt, der auf einer Schlittenführung 130 linear und reproduzierbar verschoben werden kann, z.B. durch eine nicht dargestellte Mikrometerschraube oder -spindel. Die erfindungsgemäße Anordnung nach Fig. 9 eignet sich besonders für die Absorptionsspektroskopie an schwach absorbierenden Flüssigkeiten, weil die Schichtlänge beliebig verlängert werden kann. Als praktisches Beispiel sei genannt die direkte Nitratbestimmung in Wasser. Auch im Rahmen der HPLC (High Performance Liquid Chromatography) ermöglicht diese Anordnung völlig neue meßtechnische Dimensionen, wie dies bereits vorstehend erörtert wurde.

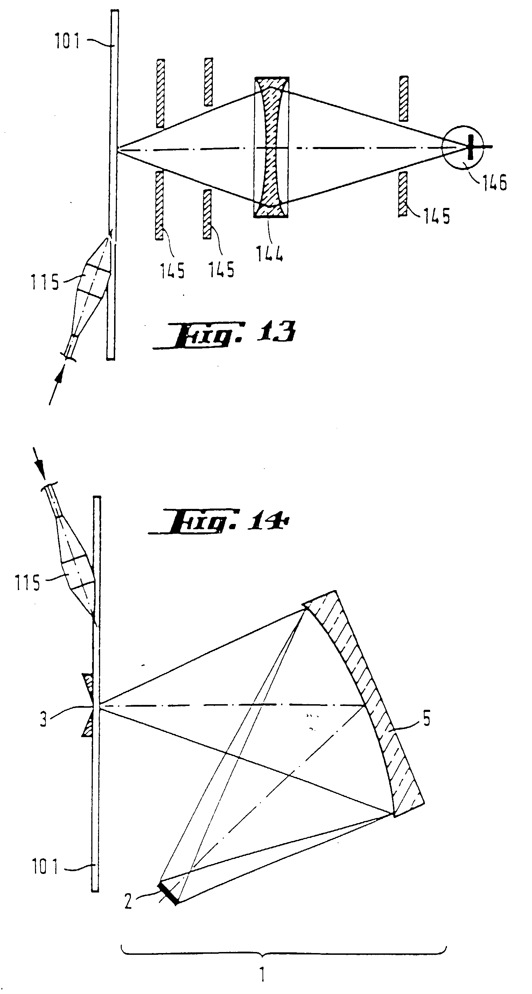

In Fig. 10 ist ein einfaches Anwendungsbeispiel des erfindungsgemäßen Mikro-Küvettensystems schematisch wiedergegeben. Eine Kontinuums-Lichtquelle 131 mit kleinem Leuchtfeld wird durch einen Ellipsoid-Spiegel 132 auf die Eintrittsfläche 133 eines Übertragungs-Lichtleiters 134 abgebildet. Dieser Lichtleiter 134 schließt an den erfindungsgemäßen Doppelkegel 115 als Aperturwandler und Koppler an und besorgt zugleich die Schrägeinkopplung der Strahlung in die Kapillarküvette 101. In einem durch die Meßaufgabe gegebenen Abstand folgt ein gleichartiger Doppelkegel 115 zur Auskopplung der Strahlung, die in streng analoger Weise über einen Lichtleiter 135 zum Spektrometer 136, als dem eigentlichen Meßteil der Anordnung, führt. Vorzugsweise ist die Apertur in Leuchte und Spektrometer gleich, mit dem derzeit höchsten erreichbaren Wert gewählt. Bezüglich der Einzelheiten der Leuchte und des Spektrometers, das z.B. ein Simultanspektrometer sein kann, wird ebenfalls auf das deutsche Patent 4226884 des Anmelders verwiesen.

In der Anwendung der erfindungsgemäßen Kapillar-Küvettensysteme ergeben sich für die Spektralphotometrie zwei Schwerpunkte. Erstens die Absorptionsspektrometrie im Nanoliterbereich der HPLC, einschließlich reaktionskinetischer Messungen im Submikrobereich, z.B. Kapillarelektrophorese und strahlungsabhängige (phototrope) Effekte. Zweitens - und das erscheint von besonderer Wichtigkeit - die Möglichkeit zur optimalen, verlustfreien Messung von Sekundäremissionen, also Fluoreszenz- und Raman-Strahlung an unvorstellbar kleinen Mengen, wobei der Strömungsfaden selbst in die Funktion des Spektrometerspalts treten kann.

Auf weitere Einzelheiten dieser Einsatzmöglichkeiten wird im folgenden noch näher eingegangen.

Die Absorptionsspektroskopie an kleinsten Durchflußmengen (Mikro-HPLC) erlaubt die spektroskopische Überwachung von Reaktionsabläufen, speziell der Reaktionskinetik. Dabei wird der Reaktionsablauf in dem Kapillarabschnitt zwischen der Ein- und der Auskoppelstelle ermittelt, beispielsweise in Abhängigkeit von physikalischen und chemischen Beeinflussungen der Probe zwischen den An- und Auskopplungsstellen der Kapillarküvette. Als physikalische Einflüsse, die auf die Probe zwischen den Koppelstellen wirken, kommen beispielsweise folgende in Betracht: optische Bestrahlung mit ausgewählten Eigenschaften, wie z.B. Spektralbereich, Belichtungszeit (z.B. Blitz) usw. zur Messung phototroper oder photolytischer bzw. photosynthetischer Vorgänge; Elektrische Beeinflussung durch Gleich- und Wechselfelder, wie z.B. Kapillarelektrophorese; Magnetische Beeinflussungen, wie z.B. Zeeman-Effekt-Messungen; Temperatureinflüsse; radioaktive und Röntgenbestrahlung usw. Als chemische Einflüsse seien beispielsweise genannt: der Einsatz von aktivierten Kapillarabschnitten als Einwegküvetten für spezielle Diagnoseaufgaben im Bereich der Biomedizin. Dabei füllen sich die Kapillarabschnitte wegen der Kapillarwirkung von selbst. Die Proben können daneben vor oder während der Messung physikalisch behandelt werden.

Ein Beispiel für eine derartige Beeinflussung der Reaktionskinetik ist schematisch in den Fig. 11 und 12 dargestellt. Das aus dem Kapillarrohr 101 und den zur Ein- und Auskopplung der Strahlung dienenden Doppelkegeln 115 bestehende Kapillar-Küvettensystem ist mit dem zwischen den Ankopplungsstellen gelegenen Bereich des Kapillarrohres 101 durch eine Reaktionskammer 140 geleitet, welche mit Ellipsoid-Spiegeln 141, 142 versehen ist. In der Brennlinie des einen Ellipsoid-Spiegels 141 ist das Kapillarrohr, in der Brennlinie des anderen Ellipsoid-Spiegels ist eine Blitzlichtlampe 143 angeordnet. Das System ermöglicht die Untersuchung photochemischer Vorgänge.

Auch bei dieser Ausgestaltung erlauben die Doppelkegel mit verschiedenen Kegelwinkeln eine wahlweise Anpassung an zwei verschiedene Aperturen mit streng reversibler Wirkung. Die prinzipiell auch im koaxialen Betrieb einsetzbaren Doppelkegel entfalten aber bei der Schrägeinkopplung in Kapillaren ihre optimale Wirkung, da hier deren

Lichtleiterfunktionen ausgenutzt werden. Die Vorteile der Schrägeinkopplung in sehr dünne Kapillaren erlauben es, daß der Lichtleitwert trotz des sehr kleinen Querschnitts auf beliebige Längen voll erhalten bleibt. Die Durchstrahlung der Probe ist durch die Zentralfokussierung an die angepaßte Apertur optimal. Ein ganz wesentlicher Vorzug liegt aber auch in der Tatsache, daß die Strömungsführung für die Messung nicht verändert werden muß, wodurch Peakverbreiterungen und Verschleppungsfehler ausgeschlossen sind. Als Einkopplungsmöglichkeiten kommen speziell in Betracht:
a) halbzylindrische Nut für zylindrische Kapillaren (was die beste Lösung darstellt) gemäß Fig. 4a;
b) Keilnuten für zylindrische Küvetten, Überbrückung der Zwickel mit Immersion gemäß Fig. 4b;
c) angeschliffene Planfläche für prismaische oder abgeflachte Kapillaren gemäß Fig. 4c.

Die durch die Erfindung vorgeschlagene Kopplung über die Aperturwandlerkegel gewährleistet somit einen verlustfreien Übergang und berücksichtigt zusätzlich die unterschiedlichen Aperturverhältnisse in den Versorgungslichtleitern und in der Meßkapillare. Alle bisher erwähnten Methoden beziehen nämlich ihre Meßwerte direkt auf die eingestrahlte Energie. Diese ist somit selbst das Vehikel der gesuchten Meßgrößen und in aller Regel viel größer als diese. Wegen der bekannten Begrenzung des beherrschbaren Signal zu Rausch-Verhältnisses sind jedoch auch bei Anwendung der vorliegenden Erfindung die Nachweisgrenzen der Messung begrenzt.

So nützlich daher der damit erzielte Fortschritt bei diesen Messungen ist, der physikalisch wichtigste Gewinn dieser Einkoppelmethode liegt jedoch auf einem anderen Gebiet, das durch die folgenden beiden, eng verwandten Anwendungen illustriert wird. Sie betreffen die Raman- und die Fluoreszenz-Spektroskopie. Dabei wird die eingestrahlte Primärenergie von der Messung ausgeschlossen und zwar nicht nur, wie üblich, durch die spektrale Aufspaltung, sondern ganz überwiegend durch die spezielle, durch das erfindungsgemäße Küvettensystem ermöglichte Strahlführung, wie dies im folgenden näher erläutert wird.

In die Kapillare als Probenträger wird die Anregungsstrahlung mit dem Kegel oder Doppelkegel eingekoppelt. Der Vorzug des Aperturwandlers ist, daß die Probe immer optimal bestrahlt wird, ob die Strahlung nun von einer Parallelquelle (Laser) kommt oder von einer Punktquelle. Wegen des Lichtleitereffekts bleibt jedoch die Anregungsstrahlung in die Kapillare gefesselt, während das unter 360° abgestrahlte Sekundärlicht die Kapillare senkrecht zur Achse ungehindert verläßt. Der auf diese Weise selbstleuchtende Stromfaden wird entweder zur integralen Fluoreszenzmessung direkt auf einen geeigneten Photoempfänger (Diode, Vervielfacher o.ä.) abgebildet, wie in Fig. 13 dargestellt, oder er bildet zur spektralen Emissionsmessung (Fluoreszenz- oder Raman-Strahlung) selbst den Eintrittsspalt eines Spektrometers, vorzugsweise eines Simultanspektrometers, wie in Fig. 14 gezeigt ist. Da man erreichen kann, daß jeweils nur der Stromfadenabschnitt zur Messung gelangt, der der Länge der Empfängerdiode auf der Diodenzeile entspricht, resultiert eine Peaklänge im 0,1 mm-Bereich und damit ein Peakvolumen von 1 Nanoliter und darunter.

Bei der in Fig. 13 gezeigten Anordnung zur integralen Messung der Fluoreszenzstrahlung, die von dem Küvettenrohr 101 austritt, wird das Fluoreszenzlicht, von einer Optik 134 und durch einige Blenden 135 begrenzt, einem Photoempfänger 136 zugeführt.

Bei der in Fig. 14 gezeigten Anordnung zur spektralen Messung der Fluoreszenz- oder Raman-Strahlung befindet sich das Küvettenrohr 101 am Eingangsspalt 3 eines Simultanspektrometers 1.

Das senkrechte Kapillarrohr 101 führt in seiner Achse das durchlaufende Probengut. Über den Aperturwandler 115 wird die Anregungsstrahlung z.B. von einer Laserdiode in die Kapillare eingekoppelt. Das zur Sekundärstrahlung angeregte Probengut in der Kapillare wirkt auf eine definierte kurze Strecke von z.B. 0,5 mm als selbstleuchtendes Spaltelement 3 eines Spektrometers 1, das beispielsweise ein holographisch erzeugtes Konkavgitter 5 und eine Diodenzeile 2 enthält, wie dies im einzelnen in DE 4226884 beschrieben ist. Die Anregungsstrahlung, welche die Probe optimal konzentrisch durchsetzt, kann wegen des Lichtleitereffekts nicht aus der Kapillare austreten, während die Sekundär-, also die Raman- oder Fluoreszenz-Strahlung, seitlich (senkrecht) austritt und auf die Gitterfläche trifft. Die Energieausnützung ist dabei optimal, weil einerseits die Leuchtdichte im Spalt 3 die höchstmögliche ist und andererseits keinerlei Verlustglieder im Übertragungsweg liegen. Bei einem Kapillarinnendurchmesser von 0,05 mm und einer genutzten Länge von 0,5 mm ergibt sich ein sogenanntes Peakvolumen von gerade 1 Nanoliter, ein Wert, der bisher von keiner anderen optischen Methode erreicht werden konnte.

## Patentansprüche

1. Mikro-Küvettensystem für die Absorptionsphotometrie, enthaltend ein zylindrisches Küvettenrohr mit einem Hohlkern und einer darin enthaltenen Probenflüssigkeit, die zumindest in einem Längsstück des Hohlkerns von einer Strahlung durchsetzt wird, deren Absorption anschließend gemessen wird, dadurch gekennzeichnet, daß das Küvettenrohr (101) und die Probenflüssigkeit (102) brechzahlmäßig so abgestimmt sind, daß sie für die Strahlung als Stufen-Wellenleiter wirken, in welchem die Probenflüssigkeit (102) den Kern und die Wandung des Küvettenrohres (101) den Mantel bilden, und daß die Strahlung an der Außenwand des Küvettenrohres (101) eine mehrfache Reflexion, vorzugsweise eine mehrfache Totalreflexion, erfährt und die Probenflüssigkeit von der Strahlung mehrfach durchsetzt wird.

2. Mikro-Küvettensystem nach Anspruch 1, dadurch gekennzeichnet, daß die Strahlung dem aus Küvettenrohr und Probenflüssigkeit gebildeten Stufen-Wellenleiter mit einem Öffnungswinkel (103) zuführbar ist, welcher der maximalen Apertur des Stufen-Wellenleiters entspricht.

3. Mikro-Küvettensystem nach einem der Ansprüche 1 oder 2, dadurch gekennzeichnet, daß das Küvettenrohr (101) aus einem isotropen, im interessierenden Spektralbereich absorptionsfreien Material besteht.

4. Mikro-Küvettensystem nach einem der Ansprüche 1 bis 3, dadurch gekennzeichnet, daß das Küvettenrohr (101) als kreiszylindrische Mikro-Kapillare mit einem Innendurchmesser von weniger als 0,5 mm, vorzugsweise weniger als 0,25 mm, und noch bevorzugterweise weniger als 0,15 mm, und mit einem Außendurchmesser von weniger als 1,0 mm, vorzugsweise weniger als 0,35 mm, und noch bevorzugterweise weniger als 0,20 mm, ausgebildet ist.

5. Mikro-Küvettensystem nach einem der Ansprüche 1 bis 4, gekennzeichnet durch einen reflexionsarmen Übergang zwischen Probenflüssigkeit (102) und Material des Küvettenrohres (101).

6. Mikro-Küvettensystem nach einem der Ansprüche 1 bis 5, dadurch gekennzeichnet, daß auf der Außenseite des Küvettenrohres (101), zumindest in Teilbereichen, eine Metallschicht aufgebracht ist.

7. Mikro-Küvettensystem nach einem der Ansprüche 1 bis 6, dadurch gekennzeichnet, daß das Material des Küvettenrohres (101) derart gewählt ist, daß an seiner Außenseite eine Totalreflexion gegenüber einem die Küvette umgebenden Gas, vorzugsweise Luft, entsteht.

8. Mikro-Küvettensystem nach einem der Ansprüche 1 bis 7, dadurch gekennzeichnet, daß für einen Wellenlängenbereich der Strahlung von etwa 200 bis 1000 nm ein Küvettenrohr (101) aus Quarz verwendet ist.

9. Mikro-Küvettensystem nach einem der Ansprüche 1 bis 8, dadurch gekennzeichnet, daß die Küvette als Durchflußküvette ausgebildet ist.

10. Mikro-Küvettensystem nach Anspruch 9, dadurch gekennzeichnet, daß auf die beiden Enden des Küvettenrohres (101) ein ringförmiges Aufsatzstück (106) aufgebracht ist, das eine Ein- bzw. Auslaßöffnung (107,108) enthält, welche in eine Ein- bzw. Auslaßbohrung des Küvettenrohres mündet, und daß zwischen dem Aufsatzstück (106) und der Außenfläche des Küvettenrohres (101) eine Metallschicht aufgebracht ist.

11. Mikro-Küvettensystem nach einem der Ansprüche 1 bis 10, gekennzeichnet durch eine axiale An- und/oder Auskopplung der Strahlung an der Küvette.

12. Mikro-Küvettensystem nach einem der Ansprüche 1 bis 10, gekennzeichnet durch eine Schrägan- und/oder -auskopplung der Strahlung an der Küvette.

13. Mikro-Küvettensystem nach Anspruch 12, dadurch gekennzeichnet, daß die An- und/oder Auskopplung mittels eines Kegelkörpers (110) erfolgt, der vorzugsweise aus dem gleichen Material besteht wie das Küvettenrohr (101), der auf seinem Kegelmantel eine Nut (111) oder Abflachung (111) aufweist, wobei die Nut (111) vorzugsweise einen Krümmungsradius aufweist, der dem Außenradius des Küvettenrohres (101) entspricht, wobei das Küvettenrohr (101) unter Zwischenschaltung eines absorptionsfreien Mittels in der Nut derart gehaltert ist, daß im Falle der Strahlungsankopplung die Spitze des Kegelkörpers (110) in Richtung des Strahlungsdurchgangs und im Falle der Strahlungsauskopplung die Spitze des Kegelkörpers (110) entgegen der Richtung des Strahlungsdurchgangs weist.

14. Mikro-Küvettensystem nach Anspruch 13, dadurch gekennzeichnet, daß der Kegelkörper (110) kreiszylindrisch ausgebildet ist.

15. Mikro-Küvettensystem nach Anspruch 13 oder 14, dadurch gekennzeichnet, daß der Winkel, den die Kegellängsachse mit dem Kegelmantel einschließt, kleiner oder gleich einem Viertel des maximalen Aperturwinkels des Stufen-Wellenleiters ist.

16. Mikro-Küvettensystem nach Anspruch 14, dadurch gekennzeichnet, daß bei einem Kegelkörper (110) und einem Küvettenrohr (101) aus Quarz der Winkel, den die Kegellängsachse mit dem Kegelmantel einschließt, etwa 15° bis 22,5°, vorzugsweise etwa 22° bis 22,5°, beträgt.

17. Mikro-Küvettensystem nach einem der Ansprüche 1 bis 16, dadurch gekennzeichnet, daß der Anschluß des Küvettensystems an eine Lichtquelle und/oder an eine Meßeinrichtung mittels eines Aperturwandlers (113) erfolgt, der jeweils aus einem koaxialen, kegelförmigen Lichtleiter oder Spiegel mit einer Lichteintritts- und einer Lichtaustrittsöffnung besteht, wobei die größere der Öffnungen jeweils dem Küvettenrohr (101) zugekehrt ist.

18. Mikro-Küvettensystem nach Anspruch 17, dadurch gekennzeichnet, daß der Aperturwandler (113) aus dem gleichen Material besteht wie das Küvettenrohr (101) und gegebenenfalls der zur Ein- und/oder Auskopplung verwendete Kegelkörper (110), und/oder daß die Lichteintrittsöffnung und die Lichtaustrittsöffnung des Aperturwandlers (113) senkrecht zur optischen Achse verlaufende Querschnittsöffnungen sind.

19. Mikro-Küvettensystem nach Anspruch 17 oder 18, dadurch gekennzeichnet, daß der jeweils kleineren Öffnung des Aperturwandlers (113) zumindest ein Stück eines vorzugsweise zylindrischen Lichtleiters (114) vorgeschaltet ist, dessen Querschnitt im Anlagebereich an den Aperturwandler (113) der kleineren Öffnung entspricht, zur Ankopplung des Aperturwandlers (113) an eine Lichtquelle oder eine Meßvorrichtung.

20. Mikro-Küvettensystem nach Anspruch 19, dadurch gekennzeichnet, daß der Lichtleiter (114), zumindest zwischen seinen Endbereichen, als vorzugsweise flexibles Lichtleitkabel ausgebildet ist.

21. Mikro-Küvettensystem nach Anspruch 19 oder 20, dadurch gekennzeichnet, daß die zumindest eine Lichtleitfaser des Lichtleiters (114) aus dem gleichen Material besteht wie das Küvettenrohr (101) und gegebenenfalls der Kegelkörper (110) und/oder der Aperturwandler (113).

22. Mikro-Küvettensystem nach einem der Ansprüche 17 bis 21, dadurch gekennzeichnet, daß die Austrittsapertur des Kegels größer ist als die Eintrittsapertur des Aperturwandlers.

23. Mikro-Küvettensystem nach Anspruch 22, dadurch gekennzeichnet, daß bei Verwendung von Quarz als Küvettenrohr, Kegel und Aperturwandler sowie gegebenenfalls als Lichtleiter der Winkel, den der Kegelmantel des Aperturwandlers (113) zu seiner Mittelachse einschließt, etwa 13° und der Winkel, den der Kegelmantel des Kegelkörpers (110) zu seiner Mittelachse einschließt, etwa 20° bis 22,5° beträgt.

24. Mikro-Küvettensystem nach einem der Ansprüche 13 bis 23, dadurch gekennzeichnet, daß der Kegelkörper (110) und der zugehörige Aperturwandler (113) als vorzugsweise einstückiger Doppelkegel (115) ausgebildet ist.

25. Mikro-Küvettensystem nach Anspruch 24, dadurch gekennzeichnet, daß zwischen Aperturwandler (113) und Kegelkörper (110) ein zylindrisches Teil (112) vorgesehen ist, welches die Austrittsfläche des Aperturwandlers (113) an die Eintrittsfläche des Kegelkörpers (110) ankoppelt.

26. Mikro-Küvettensystem nach Anspruch 25, dadurch gekennzeichnet, daß der zumindest eine Doppelkegel (115) im zylindrischen Teil (112) vorzugsweise über punktuelle Anlageflächen (118,119,120) gehaltert ist.

27. Mikro-Küvettensystem nach einem der Ansprüche 13 bis 26, dadurch gekennzeichnet, daß zwei Kegelkörper (115) derart beabstandet voneinander angeordnet sind, daß ihre Nuten (111) miteinander fluchten und nach oben gekehrt sind, und daß in den Nuten das Küvettenrohr (101) liegt.

28. Mikro-Küvettensystem nach Anspruch 27, dadurch gekennzeichnet, daß zumindest einer der Kegelkörper (115) längs des Küvettenrohres (101) verschiebbar ist, zur Einstellung der optischen Weglänge und/oder des einer Absorptionsmessung zuzuführenden Längsstückes des Küvettenrohres (101).

29. Mikro-Küvettensystem nach Anspruch 28, dadurch gekennzeichnet, daß zumindest einer der Doppelkegel (115) verschiebbar gelagert ist.

30. Verwendung des Mikro-Küvettensystems nach einem der -Ansprüche 1 bis 29 in einem spektroskopischen System.

31. Verwendung des Mikro-Küvettensystems nach einem der Ansprüche 1 bis 29 in der Absorptionsspektrometrie, insbesondere von schwach absorbierenden Flüssigkeiten.

32. Verwendung des Mikro-Küvettensystems nach einem der Ansprüche 1 bis 29 in der HPLC.

33. Spektroskopisches System, in welchem zumindest eine Probe mittels von einer Lichtquelle ausgehendem Licht beleuchtet und das von der Probe ausgehende Licht auf den Eintrittsspalt zumindest eines Spektrometers, insbesondere eines Simultanspektrometers, gebündelt wird, dadurch gekennzeichnet, daß im Objektraum zwischen der Lichtquelle (131) bzw. deren Bild (133) und dem Eintrittsspalt des Spektrometers (136) ein Mikro-Küvettensystem (101,115,134,135) nach einem der Ansprüche 1 bis 29 enthalten ist.

34. Spektroskopisches System nach Anspruch 33, dadurch gekennzeichnet, daß als Beleuchtungsanordnung eine punktförmige oder quasi punktförmige Lichtquelle (131) verwendet ist, die mittels eines asphärischen, vorzugsweise eines Ellipsoid-Spiegels, auf die Eintrittsöffnung (133) eines zwischen Lichtquelle und Objekt angeordneten Aperturwandlers oder eines diesem vorgeschalteten Lichtleiters (134) abgebildet ist.

35. Spektroskopisches System nach Anspruch 33 oder 34, dadurch gekennzeichnet, daß als Spektrometer eine aus einem Beugungsgitter und einer Empfängereinheit bestehende Anordnung verwendet ist.

36. Spektroskopisches System nach Anspruch 35, dadurch gekennzeichnet, daß als Beugungsgitter ein holographisches Konkavgitter und als Empfänger eine Photodiodenzeile dienen.

37. Spektroskopisches System nach Anspruch 34 bis 36, dadurch gekennzeichnet, daß der Spiegel der Beleuchtungseinrichtung und das Konkavgitter des Spektrometers die gleiche Apertur aufweisen.

38. Spektroskopisches System nach einem der Ansprüche 33 bis 37, dadurch gekennzeichnet, daß das Mikro-Küvettensystem (101) in einem Reaktionsraum (140) angeordnet ist, über welchem physikalische Einflüsse auf die Probe zur Einwirkung bringbar sind.

39. Spektroskopisches System nach einem der Ansprüche 33 bis 38, dadurch gekennzeichnet, daß aktivierte, vorzugsweise zum einmaligen Gebrauch vorgesehene Kapillarabschnitte die Mikroküvetten bilden.

40. Spektroskopisches System nach einem der Ansprüche 33 bis 37, dadurch gekennzeichnet, daß das Mikro-Küvettensystem (101) als Strahlenquelle für eine Sekundärstrahlung dient, welche von einer vorzugsweise durch Schrägeinkopplung in die Küvette eingespeisten Primärstrahlung angeregt ist.

41. Spektroskopisches System nach Anspruch 40, dadurch gekennzeichnet, daß als Sekundärstrahlung eine Fluoreszenzstrahlung dient, welche von einem Photoempfänger (146) gemessen wird.

42. Spektroskopisches System nach Anspruch 40, dadurch gekennzeichnet, daß als Sekundärstrahlung eine Fluoreszenz- oder Raman-Strahlung dient, und daß die Kapillarküvette den Eintrittsspalt (3) eines Spektrometers (1), vorzugsweise eines Simultanspektrometers, bildet oder im Eintrittsspalt angeordnet bzw. auf diesem abgebildet ist.

## Claims

1. Microcuvette system for absorption photometry comprising a cylindrical cuvette tube with a hollow core and a sample liquid contained therein that is penetrated in a longitudinal section of the hollow core by radiation whose absorption is subsequently measured, characterized in that the refractive indices of the cuvette tube (101) and the liquid (102) are matched such that the latter act as a step-index waveguide for the radiation, wherein the sample liquid (102) forms the core and the wall of the cuvette tube (101) forms the cladding and that the radiation undergoes multiple reflection, preferably multiple total reflection, on the outer wall of the cuvette tube (101) and the sample liquid is penetrated multiple times by the radiation.

2. Microcuvette system in accordance with Claim 1, characterized in that the radiation is directable to the step-index waveguide formed by the cuvette tube and sample liquid at an aperture angle (103) corresponding to the maximum aperture of the step-index waveguide.

3. Microcuvette system in accordance with Claim 1 or 2, characterized in that the cuvette tube (101) consists of an isotropic material that is absorption-free in the spectral region of interest.

4. Microcuvette system in accordance with one of Claims 1 to 3, characterized in that the cuvette tube (101) is shaped as a regular-cylindrical microcapillary tube with an inside diameter of less than 0.5 mm, preferably less than 0.25 mm, and more preferably less than 0.15 mm, and with an outside diameter of less than 1.0 mm, preferably less than 0.35 mm, and more preferably less than 0.20 mm.

5. Microcuvette system in accordance with one of Claims 1 to 4, characterized by a low-reflection transition between the sample liquid (102) and the material of the cuvette tube (101).

6. Microcuvette system in accordance with one of Claims 1 to 5, characterized in that a metal layer is applied to at least portions of the outside of the cuvette tube (101).

7. Microcuvette system in accordance with one of Claims 1 to 6, characterized in that the material of the cuvette tube (101) is selected such that a total reflection occurs on its outside with respect to a gas, preferably air, surrounding the cuvette.

8. Microcuvette system in accordance with one of Claims 1 to 7, characterized in that a cuvette tube (101) made of quartz is used for a radiation wavelength region of about 200 to 1000 nm.

9. Microcuvette system in accordance with one of Claims 1 to 8, characterized in that the cuvette is implemented as a flow-through cuvette.

10. Microcuvette system in accordance with Claim 9, characterized in that a ringshaped element (106) is mounted on each end of the cuvette tube (101) and contains an inlet or outlet opening (107, 108), that terminates in a respective inlet or outlet hole in the cuvette tube and that a metal layer is applied between the mountable element (106) and the outer surface of the cuvette tube (101).

11. Microcuvette system in accordance with one of Claims 1 to 10, characterized by axial entrance or exit coupling of the radiation applied to the cuvette.

12. Microcuvette system in accordance with one of Claims 1 to 10, characterized by oblique entrance and/or exit coupling of the radiation applied to the cuvette.

13. Microcuvette system in accordance with Claim 12, characterized in that entrance and/or exit coupling is effected using a conical body (110) that preferably consists of the same material as the cuvette tube (101) and has on its envelope a groove (111) or plane surface (111), whereby the groove (111) preferably has a radius of curvature corresponding to the outer radius of the cuvette tube (101) , whereby the cuvette tube (101) is supported in the groove via an interjected absorption-free agent such that for radiation entrance the apex of the conical body (110) points in the direction of the radiation path and for radiation exit the apex of the conical body (110) points in the direction opposite that of the radiation path.

14. Microcuvette system in accordance with Claim 13, characterized in that the conical body (110) has a regular-cylindrical shape.

15. Microcuvette system in accordance with Claim 13 or 14, characterized in that the angle formed by the longitudinal axis of the cone with its envelope is less than or equal to one-fourth of the maximum aperture angle of the step-index waveguide.

16. Microcuvette system in accordance with Claim 14, characterized in that for a conical body (110) and a cuvette tube (101) made of quartz, the angle formed by the longitudinal axis of the cone and its envelope is about 15° to 22.5°, preferably about 22° to 22.5°.

17. Microcuvette system in accordance with one of Claims 1 to 16, characterized in that the coupling of the cuvette system to a light source and/or to a measurement device is effected using an aperture converter (113) that consists in each case of a coaxial, cone-shaped light guide or mirror with entrance and exit openings for light, whereby the larger of the openings in each case points toward the cuvette tube (101).

18. Microcuvette system in accordance with Claim 17, characterized in that the aperture converter (113) consists of the same material as the cuvette tube (101) and the conical bodies (110) possibly used for entrance or exit coupling, and/or that the light entrance or exit openings of the aperture converter (113) are cross-section openings perpendicular to the optical axis.

19. Microcuvette system in accordance with Claim 17 or 18, characterized in that at least a portion of a preferably cylindrical light guide (114) is connected before the smaller opening of the aperture converter (113) in each case, the cross-section of the light guide in the area of attachment to the aperture converter (113) corresponding to the smaller opening, in order to couple the aperture converter (113) to a light source or a measuring device.

20. Microcuvette system in accordance with Claim 19, characterized in that the light guide (114) at least between its terminal areas is implemented as a preferably flexible fiber optic cable.

21. Microcuvette system in accordance with Claim 19 or 20, characterized in that the at least one fiber of the light guide (114) consists of the same material as the cuvette tube (101) and possibly the conical body (110) and/or the aperture converter (113).

22. Microcuvette system in accordance with one of Claims 17 to 21, characterized in that the exit aperture of the cone is larger than the entrance aperture of the aperture converter.

23. Microcuvette system in accordance with Claim 22, characterized in that, when quartz is used for the cuvette tube, cone, aperture converter, and possibly the light guide, the angle formed by the cone envelope of the aperture converter (113) with its central axis is about 13° and the angle formed by the envelope of the conical body (110) with its central axis is about 20° to 22.5°.

24. Microcuvette system in accordance with one of Claims 13 to 23, characterized in that the conical body (110) and the associated aperture converter (113) are designed preferably as a one-piece double cone (115).

25. Microcuvette system in accordance with Claim 24, characterized in that a cylindrical part (112) is provided between the aperture converter (113) and conical body (110), the cylindrical part (112) coupling the exit surface of the aperture converter (113) to the entrance surface of the conical body (110).

26. Microcuvette system in accordance with Claim 25, characterized in that the at least one double cone (115) is supported in the cylindrical part (112) preferably via pointwise support areas (118,119,120).

27. Microcuvette system in accordance with one of Claims 13 to 26, characterized in that two conical bodies (115) are distanced from each other such that their grooves (111) are positioned on top and aligned with each other and that the cuvette tube (101) lies in the grooves.

28. Microcuvette system in accordance with Claim 27, characterized in that at least one of the conical bodes (115) is displaceable along the cuvette tube (101) for adjusting the optical path and/or along the longitudinal section of the cuvette tube (101) that leads to an absorption measurement device.

29. Microcuvette system in accordance with Claim 28, characterized in that at least one of the double cones (115) is supported such that it is displaceable.

30. Application of the microcuvette system in accordance with one of Claims 1 to 29 in a spectroscopic system.

31. Application of the microcuvette system in accordance with one of Claims 1 to 29 in absorption spectrometry, in particular of weakly absorbing liquids.

32. Application of the microcuvette system in accordance with one of Claims 1 to 29 in HPLC.

33. Spectroscopic system in which at least one sample is illuminated by light from a light source and that light emanating from the sample is focused on the entrance slit of at least one spectrometer, in particular a multiplex spectrometer, characterized in that a microcuvette system (101,115,134,135) in accordance with one of Claims 1 to 29 is contained in the object space between the light source (131) or its image (133) and the entrance slit of the spectrometer (136)

34. Spectroscopic system in accordance with Claim 33, characterized in that a point-shaped or pseudo-point-shaped light source (131) is used as an illumination arrangement, the light source being focused by an aspheric, preferably ellipsoid mirror on the entrance opening (133) of an aperture converter arranged between the light source and the object, or of a light guide (134) positioned ahead of the aperture converter.

35. Spectroscopic system in accordance with Claim 33 or 34, characterized in that an arrangement consisting of a diffraction grating and a receiver unit is employed as a spectrometer.

36. Spectroscopic system in accordance with Claim 35, characterized in that a holographic concave grating serves as the diffraction grating and a photodiode array serves as the receiver.

37. Spectroscopic system in accordance with Claims 34 to 36, characterized in that the mirror of the illumination device and the concave grating of the spectrometer have the same aperture.

38. Spectroscopic system in accordance with one of Claims 33 to 37, characterized in that the microcuvette system (101) is arranged in a reaction chamber (140) via which physical influences can be exerted on the sample.

39. Spectroscopic system in accordance with one of Claims 33 to 38, characterized in that the microcuvettes are implemented by capillary sections, preferably intended for one-time use.

40. Spectroscopic system in accordance with one of Claims 33 to 37, characterized in that the microcuvette system (101) serves as a radiation source for secondary radiation that is excited by primary radiation applied to the cuvette preferably by oblique coupling.

41. Spectroscopic system in accordance with Claim 40, characterized in that fluorescence radiation serves as the secondary radiation, which is measured by a photodetector (146).

42. Spectroscopic system in accordance with Claim 40, characterized in that fluorescence or Raman radiation serves as the secondary radiation and that the capillary cuvette forms the entrance slit (3) of a spectrometer (1), preferably a multiplex spectrometer, or is arranged in the entrance slit or reflected thereon.

## Revendications

1. Système de micro-cuvette pour la photométrie d'absorption, contenant un tube cylindrique formant cuvette présentant un coeur creux et un liquide échantillon qui y est contenu et qu'au moins dans une partie longitudinale du coeur creux traverse un rayonnement dont on mesure ensuite l'absorption, caractérisé par le fait que le tube formant cuvette (101) et le liquide échantillon (32) sont, en valeur de l'indice de réfraction, accordés de façon que, pour le rayonnement, ils opèrent en tant que guides d'ondes à gradient d'indice, dans lequel le liquide échantillon (102) forme le coeur et la paroi du tube formant cuvette (101) forme la gaine optique, et que le rayonnement subit, sur la paroi extérieure du tube formant cuvette (101), une réflexion multiple, de préférence une réflexion totale multiple, et que le liquide échantillon est plusieurs fois traversé par le rayonnement.

2. Système de micro-cuvette selon la revendication 1, caractérisé par le fait que le rayonnement peut être amené au guide d'ondes à gradient d'indice, constitué du tube formant cuvette et du liquide d'échantillon, avec un angle de cône (103) qui correspond à l'angle d'ouverture maximal du guide d'ondes à gradient d'indice.

3. Système de micro-cuvette selon l'une des revendications 1 ou 2, caractérisé par le fait que le tube formant cuvette (101) est constitué d'un matériau isotrope, non absorbant sur la plage spectrale intéressée.

4. Système de micro-cuvette selon l'une des revendications 1 à 3, caractérisé par le fait que le tube formant cuvette (101) est conçu sous forme d'un micro-capillaire cylindrique à base circulaire d'un diamètre intérieur inférieur à 0,5 mm, de préférence inférieur à 0,25 mm et de plus grande préférence inférieur à 0,15 mm et d'un diamètre extérieur inférieur à 1,0 mm, de préférence inférieur à 0,35 mm et de plus grande préférence inférieur à 0,20 mm.

5. Système de micro-cuvette selon l'une des revendications 1 à 4, caractérisé par un passage, présentant peu de réflexion, entre le liquide échantillon 102 et le matériau du tube formant cuvette (101).

6. Système de micro-cuvette selon l'une des revendications 1 à 5, caractérisé par le fait qu'une couche métallique est appliquée sur la face extérieure du tube formant cuvette (101), au moins dans des zones partielles.

7. Système de micro-cuvette selon l'une des revendications 1 à 6, caractérisé par le fait que le matériau du tube formant cuvette (101) est choisi de façon que sur sa face extérieure se produise une réflexion totale par rapport à un gaz, de préférence l'air, entourant la cuvette.

8. Système de micro-cuvette selon l'une des revendications 1 à 7, caractérisé par le fait que pour une plage de longueurs d'ondes du rayonnement allant d'environ 200 à 100 nm on emploie un tube formant cuvette (101) en quartz.

9. Système de micro-cuvette selon l'une des revendications 1 à 8, caractérisé par le fait que la cuvette est conçue sous forme de cuvette de circulation.

10. Système de micro-cuvette selon la revendication 9, caractérisé par le fait que sur les deux extrémités du tube formant cuvette (101) est rapporté un élément annulaire rapporté (106) qui contient une ouverture d'entrée ou une ouverture de sortie (107, 108) qui débouche dans un perçage d'entrée ou un perçage de sortie du tube formant cuvette et qu'un couche métallique est appliquée entre l'élément rapporté (36) et la surface extérieure du tube formant cuvette (101).

11. Système de micro-cuvette selon l'une des revendications 1 à 10, caractérisé par un couplage axial du rayonnement avec la cuvette et/ou un découplage axial du rayonnement d'avec la cuvette.

12. Système de micro-cuvette selon l'une des revendications 1 à 10, caractérisé par un couplage oblique du rayonnement avec la cuvette et/ou un découplage oblique du rayonnement d'avec la cuvette.

13. Système de micro-cuvette selon la revendication 12, caractérisé par le fait que le couplage et/ou le découplage se fait au moyen d'un corps conique (110) qui de préférence est constitué du même matériau que le tube formant cuvette (101) et qui présente sur sa surface latérale conique une rainure (111) ou un méplat (111), la rainure (111) présentant de préférence un rayon de courbure qui correspond au rayon extérieur du tube formant cuvette (101), le tube formant cuvette (101) étant maintenu dan la rainure, avec interposition d'un moyen non absorbant, de façon que dans le cas du couplage du rayonnement, la pointe du corps conique (110) soit orientée dans le sens du passage du rayonnement et que dans le cas du découplage de rayonnement, la pointe du corps conique (110) soit orientée en sens inverse du passage de rayonnement.

14. Système de micro-cuvette selon la revendication 13, caractérisé par le fait que le corps conique (110) est conçu sous forme d'un cylindre à base circulaire.

15. Système de micro-cuvette selon la revendications 13 ou 14, caractérisé par le fait que l'angle que fait l'axe longitudinal du cône avec la surface latérale du cône est inférieur ou égal au quart de l'angle d'ouverture maximal du guide d'ondes à gradient d'indice.

16. Système de micro-cuvette selon la revendication 14, caractérisé par le fait que dans le cas d'un corps conique (110) et d'un tube format cuvette (101) en quartz, l'angle que fait l'axe longitudinal du cône avec la surface latérale du cône vaut environ 15° à 22,5°, de préférence environ 22° à 22,5°.

17. Système de micro-cuvette selon l'une des revendications 1 à 16, caractérisé par le fait que le raccordement du système de cuvette à une source lumineuse et/ou à un dispositif de mesure se fait au moyen d'un transformateur d'angle d'ouverture (113) qui est respectivement constitué d'un guide de la lumière, coaxial, en forme de cône, ou d'un miroir, présentant une ouverture d'entrée de la lumière et une ouverture de sortie de la lumière, la plus grande des ouvertures étant chaque fois orientée vers le tube formant cuvette (101).

18. Système de micro-cuvette selon la revendication 17, caractérisé par le fait que le transformateur d'angle d'ouverture (113) est constitué du même matériau que le tube formant cuvette (101) et éventuellement que le corps conique (101) employé pour le couplage et/ou le découplage, et/ou que l'ouverture d'entrée de la lumière et l'ouverture de sortie de la lumière du transformateur d'angle d'ouverture (113) sont des ouvertures en section transversale orientées perpendiculairement à l'axe optique.

19. Système de micro-cuvette selon la revendication 17 ou 18, caractérisé par le fait qu'en amont de la plus petite ouverture du transformateur d'angle d'ouverture (113) est prévu, pour le couplage du transformateur d'angle d'ouverture (113) à une source de lumière ou un dispositif de mesure, au moins un morceau d'un guide de la lumière (114), de préférence cylindrique, dont la section dans la zone d'appui contre le transformateur d'angle d'ouverture (113) correspond à la plus petite ouverture.

20. Système de micro-cuvette selon la revendication 19, caractérisé par le fait qu'au moins entre ses zones d'extrémité, le guide de la lumière (114) est conçu sous forme d'un câble guide de la lumière, de préférence flexible.

21. Système de micro-cuvette selon la revendication 19 ou 20, caractérisé par le fait que la fibre, guide de la lumière, dont il y a au moins une, du guide de la lumière (114) est constituée du même matériau que le tube formant cuvette (101) et éventuellement que le corps conique (110) et/ou que le transformateur d'angle d'ouverture (113).

22. Système de micro-cuvette selon l'une des revendication 19 à 21, caractérisé par le fait que le demi-angle au sommet de sortie du corps conique est supérieur au demi-angle au sommet d'entrée du transformateur d'angle d'ouverture.

23. Système de micro-cuvette selon la revendication 22, caractérisé par le fait que, lors de l'emploi de quartz comme tube formant cuvette, comme corps conique et transformateur d'angle d'ouverture, ainsi qu'éventuellement comme guide de la lumière, l'angle que la surface latérale conique du transformateur d'angle d'ouverture (113) fait avec son axe de cône vaut environ 13° et l'angle que la surface latérale conique du corps conique (110) fait avec son axe de cône vaut environ 20° à 22,5°.

24. Système de micro-cuvette selon l'une des revendications 13 à 23, caractérisé par le fait que le corps conique (110) et le transformateur d'angle d'ouverture correspondant (113) sont de préférence conçus sous forme d'un double cône d'une seule pièce (115).

25. Système de micro-cuvette selon la revendication 24, caractérisé par le fait qu'entre le transformateur d'angle d'ouverture (113) et le corps conique (110) est prévue une partie cylindrique (112) qui couple la surface de sortie du transformateur d'angle d'ouverture (113) à la surface d'entrée du corps conique (110).

26. Système de micro-cuvette selon la revendication 25, caractérisé par le fait que le double cône (115), dont il y a au moins un, est maintenu, par sa partie cylindrique (112), de préférence par l'intermédiaire de surfaces d'appui ponctuelles (118, 119, 120).

27. Système de micro-cuvette selon l'une des revendications 13 à 26, caractérisé par le fait que deux corps coniques (115) sont disposés, à distance l'un de l'autre, de façon telle que leurs rainures (111) soient dans l'alignement l'une de l'autre et orientées vers le haut, et que le tube formant cuvette (101) se trouve dans les rainures.

28. Système de micro-cuvette selon la revendication 27, caractérisé par le fait qu'au moins l'un des corps coniques (115) peut coulisser le long du tube formant cuvette (101) pour le réglage de la longueur du trajet optique et/ou de la partie longitudinale du tube formant cuvette (101) relative à une mesure d'absorption.

29. Système de micro-cuvette selon la revendication 28, caractérisé par le fait qu'au moins l'un des doubles cônes (115) est porté avec possibilité de coulissement.

30. Emploi du système de micro-cuvette selon l'une des revendications 1 à 29 dans un système spectroscopique.

31. Emploi du système de micro-cuvette selon l'une des revendications 1 à 29 dans la spectrométrie d'absorption en particulier de liquides faiblement absorbants.

32. Emploi du système de micro-cuvette selon l'une des revendications 1 à 29 dans la chromatographie liquide à haute performance.

33. Système spectroscopique dans lequel au moins un échantillon est éclairé au moyen d'une lumière sortant d'une source de lumière et la lumière sortant de l'échantillon est focalisée sur la fente d'entrée d'au moins un spectromètre, en particulier d'un spectromètre à indications simultanées, caractérisé par le fait que dans l'espace objet, entre la source de lumière (131) ou son image (133) et la fente d'entrée du spectromètre (136), est contenu un système de micro-cuvette (101, 115, 134, 135) conforme à l'une des revendications 1 à 29.

34. Système spectroscopique selon la revendication 33, caractérisé par le fait que comme dispositif d'éclairement on emploie une source de lumière (131) ponctuelle ou quasi ponctuelle dont, au moyen d'un miroir asphérique, de préférence d'un miroir ellipsoïde, l'image se forme sur l'ouverture d'entrée (133) d'un transformateur d'angle d'ouverture disposé entre la source de lumière et l'objet ou d'un guide de la lumière (134) placé en amont de ce transformateur.

35. Système spectroscopique selon la revendication 33 ou 34, caractérisé par le fait que comme spectromètre on emploie un dispositif constitué d'une grille de diffraction et d'un organe récepteur.

36. Système spectroscopique selon la revendication 35, caractérisé par le fait que servent de grille de diffraction une grille holographique concave et de récepteur une ligne de photodiodes.

37. Système spectroscopique selon les revendications 34 à 36, caractérisé par le fait que le miroir du dispositif d'éclairement et la grille concave du spectromètre présentent le même angle d'ouverture.

38. Système spectroscopique selon l'une des revendications 33 à 37, caractérisé par le fait que le système de micro-cuvette (101) est disposé dans un espace de réaction (140) par l'intermédiaire duquel des influences physiques peuvent être mises en oeuvre sur l'échantillon.

39. Système spectroscopique selon l'une des revendications 33 à 38, caractérisé par le fait que des tronçons capillaires, activés, de préférence prévus pour usage unique, forment les micro-cuvettes.

40. Système spectroscopique selon l'une des revendications 33 à 37, caractérisé par le fait que le système de micro-cuvette (101) sert de source de rayonnement pour un rayonnement secondaire qui est excité par un rayonnement primaire amené dans la cuvette de préférence par un couplage oblique.

41. Système spectroscopique selon la revendication 40, caractérisé par le fait que sert de rayonnement secondaire un rayonnement de fluorescence qui est mesuré par un photorécepteur (146).

42. Système spectroscopique selon la revendication 40, caractérisé par le fait que sert de rayonnement secondaire un rayonnement de fluorescence ou d'effet Raman et que la cuvette capillaire forme la fente d'entrée (3) d'un spectromètre (1), de préférence d'un spectromètre à indications simultanées ou est disposée dans la fente d'entrée ou que son image s'y forme.
